# EUROPEAN PATENT SPECIFICATION

(11) **EP 0 969 615 B1**
(45) Date of publication and mention of the grant of the patent: **09.04.2008**
(21) Application number: 99112768.9
(22) Date of filing: 01.07.1999
(51) Int. Cl.: H04L 12/56, H04J 3/08

(54) **Control method and equipment for ring network system**
Steuerungsverfahren und -vorrichtung für Ringnetzwerksystem
Méthode et équipement de contrôle pour système de réseau en anneau

(30) Priority: 01.07.1998 JP 18645798; 20.08.1998 JP 23434298; 16.09.1998 JP 26193898; 29.10.1998 JP 30871398
(43) Date of publication of application: 05.01.2000
(73) Proprietor: KABUSHIKI KAISHA TOSHIBA, Kawasaki-shi, Kanagawa-ken 210-8572 (JP)
(72) Inventor: Iwasaki, Hidetoshi, 1-1 Shibaura 1-chome,Minato-ku Tokyo 105 (JP); Suzuki, Masatoshi, 1-1 Shibaura 1-chome,Minato-ku Tokyo 105 (JP); Suetsugu, Hiromune, 1-1 Shibaura 1-chome,Minato-ku Tokyo 105 (JP); FUjima, Harumi, 1-1 Shibaura 1-chome,Minato-ku Tokyo 105 (JP); Nakao, Tooru, 1-1 Shibaura 1-chome,Minato-ku Tokyo 105 (JP)
(74) Representative: HOFFMANN EITLE

(56) References cited:
- EP-A- 0 696 111
- GB-A- 2 286 745

## Description

The present invention relates to a control method and transmission apparatus for a ring network system and, more particularly, to a control method and transmission apparatus for a double ring network system based on the Synchronous Digital Hierarchy (SDH) scheme or Synchronous Optical Network (SONET).

In recent years, a demand has arisen for development of a broadband Integrated Services Digital Network (ISDN) based on a user network interface which is integrated worldwide, and the SDH capable of integrally multiplexing various high-speed services and existing low-speed services is standardized. Under such circumstance, technologies associated with networks connecting communication devices based on the SDH standard in a ring configuration by internationally laying large-capacity optical submarine cables have been extensively developed.

The SDH assumes optical transmission and has various characteristic functions to utilize its wide band. For example, large-capacity optical submarine cable systems have been proposed, to which the SDH is applied and which use transmission cables laid in a ring configuration to prevent interruption of a signal against a failure. Some of these systems have a function called Automatic Protection Switching (APS). This function is defined by the ITU-T recommendation G.841, and realizes the protection of the transmission path when a failure occurs in the repeater or transmission medium of the transmission system.

In this SDH transmission system, a traffic with relatively low priority, e.g., information which is used to provide service for which communication may be interrupted is transmitted on a unused protection channel in order to improve the operation efficiency when the transmission path and the transmission apparatuses have no failure. This traffic is called a part-time traffic.

However, the above recommendation does not define any connection control method for a part-time traffic after completion of switch/switch back. Since connection error may occur in switching a part-time traffic, a part-time traffic connection control method complying with this recommendation must be provided.

The APS function of each transmission apparatus for the transmission path between transmission apparatuses determines a new transmission path switching reason to be used to determine the new state of the connection switch of the self apparatus. The new transmission path switching reason is determined from a transmission path switching reason supplied from a monitor control apparatus, a transmission path switching reason stored at present in the self apparatus, failure information of the self apparatus, and information transmitted between transmission apparatuses using a K1 or K2 byte. Next, the APS function determines the new state of the connection switch of the transmission path of the self apparatus, on the basis of that one of the new transmission path switching reasons which has the highest priority, the information stored in the self apparatus and representing the communication path connection between all transmission apparatuses, and the current connection switch state of the transmission path of the self apparatus, thereby restoring the traffic.

To prevent interruption of a traffic passing through the communication path set between the transmission apparatuses when the connection switch is switched in each transmission apparatus, in each transmission apparatus, at least pieces of communication path connection information between all transmission apparatuses on the SDH network must match with each other. However, any means for matching the pieces of communication path connection information between transmission apparatuses on a network has not been mentioned in the above recommendation.

When a communication path is to be set as normal operation, connection switches of the transmission path in transmission apparatuses are sequentially controlled from a monitor control apparatus provided in an information communication system to each transmission apparatus where the communication path passes or terminates, thereby connecting the communication path in the transmission apparatuses.

For this reason, transmission path connection switch control that is performed by the monitor control apparatus for the transmission apparatuses as normal operation for setting a communication path may conflict with transmission path connection switch control in each transmission apparatus upon starting APS.

For example, assume that in an SDH network constructed by four transmission apparatuses N1 to N4, a communication path A has already been set between the transmission apparatuses N1 and N2. To set a new communication path B between the transmission apparatuses N3 and N4 by using a protection channel transmission path, the monitor control apparatus sequentially controls the transmission path connection switches on the protection channel transmission path provided in the transmission apparatuses N3 and N4 in order to drop the protection channel transmission path. If a communication path failure occurs between the transmission apparatuses N1 and N2 after completion of control for the transmission apparatus N3 and immediately before control for the transmission apparatus N4, APS starts performing control to pass through the protection channel transmission path to the transmission apparatuses N3 and N4 to pass the traffic in the communication path A between the transmission apparatuses N1 and N2. Thereafter, the monitor control apparatus controls the transmission path connection switch of the transmission apparatus N4 to drop the protection channel transmission path. Then, the retreated traffic between the transmission apparatuses N1 and N2, which should reach the transmission apparatus N2 from the transmission apparatus N1 through the transmission apparatuses N3 and N4, by using the protection channel transmission path, drops at the transmission apparatus N4. Consequently, connection error occurs to connect the transmission apparatuses N1 and N4.

When the APS function operates in a transmission apparatus while the monitor control apparatus is setting a communication path, connection error may occur upon switching the connection switch.

In addition, to prevent interruption of a traffic through the communication path when the connection switch of each transmission apparatus is switched, pieces of communication path connection information between all transmission apparatuses on the network, which are stored in the transmission apparatuses, must match with each other.

However, under a certain condition, pieces of communication path connection information stored in transmission apparatuses may not match.

In the conventional SDH network system, a new communication path is established, for example, in the following sequence of operations.
(A) A connection switch switching control instruction is sequentially issued from a monitor control apparatus provided in the network to each transmission apparatus where a communication path passes or terminates.
(B) A transmission apparatus that has received the control instruction switches the connection switch, and when the operation is ended, returns a result response representing it to the monitor control apparatus.
(C) When result responses are returned from all transmission apparatuses to the monitor control apparatus, and the state of the communication path is determined, the information representing the communication path connection between all the transmission apparatuses on the network are sent to all the transmission apparatuses to make them update the corresponding pieces of communication path connection information stored in the transmission apparatuses.

In this procedure, the communication path connection information stored in each transmission apparatus may be different from each other until the update operation (C) is ended. If the APS function operates in this state, connection error occurs in switching the connection switches of the transmission path. In this case, communication is interrupted, and additionally, connection to an erroneous destination occurs, resulting in a very serious problem.

As described above, no means has hitherto been provided for controlling the conflict between the controlling, by means of a monitor control apparatus, the connection switches on the transmission paths between the transmission apparatuses in order to establish communication paths, and controlling the connection switches on the transmission paths, that may take place when the APS is activated. Hence, if a failure occurs during path establishing processing, the connection switch on the transmission path of each transmission apparatus, which is controlled by the APS function to prevent the interruption of traffic, may be controlled and switched by the monitor control apparatus that keeps on establishing a new path. The traffics may therefore be interrupted, or connection error may occur.

A failure may occur while the monitor control apparatus is giving the transmission apparatuses the information representing the communication path connection between all the transmission apparatuses on the network after path establishing. In this case, the APS function operates, though the pieces of communication path connection information between the transmission apparatuses do not match. Consequently, the traffic may be interrupted, or connection error may occur.

A ring network system in which a plurality of nodes are connected has a ring switching function of switching a traffic in a failure segment from a service traffic fiber passing through the failure segment to a protection fiber which does not pass through the failure segment. In such a ring network system, when a failure is detected, ring switching is automatically performed. This system also has a control function of performing forced ring switching in accordance with an instruction from an external control apparatus and the like.

This ring switching function is defined by the ITU-T recommendation G.841. For ring switching based on this recommendation, a node which starts switching transmits a K-byte request signal using the K bytes of an SDH frame to another node requiring switching operation for ring switching, and the node that has received the control signal switches the communication path on the basis of the control signal.

The above recommendation also defines switch back control for restoring the ring-switched communication path to the initial state when the failure is recovered or the operation is performed by which the communication path switched by an external control apparatus is restored. For switch back of ring switching as well, as in ring switching, a node which starts switch back sends a K-byte request signal, and each node that has received the K-byte request signal switches back the communication path to restore it to the set state (normal state) before ring switching.

In such a ring network, failures may occur or may be recovered in a plurality of segments at the same time. In this case, any node that starts performing switching or switching back transmits a K-byte request signal to switch and switch back the communication path of the node. On the network controlled state wherein ring switching control is being performed for two or more segments which are not adjacent to each other, if failures are simultaneously recovered in a plurality of segments, according to the defined ring switching function, each node starts switch back control of ring switching of the self node and passes through before all switching nodes which start switch back recognize the start of switch back control of ring switching in other segments on the basis of the K-byte request signals. Thus, when the ring network is to be controlled to set the normal state, the entire ring network is set in the pass-through state. Hence, much time is required until control for setting the normal state is ended.

As described above, in the conventional ring network system, when control to restore ring switching is to be simultaneously performed in a network state wherein ring switching control is being performed in two or more segments not adjacent to each other, each node which is to restore ring switching in accordance with the ITU-T recommendation G.841 must perform processing associated with transmission path switching reasons of other segments which are recognized by the K-byte control signals. At this time, although all the transmission path switching reasons are recovered in the network, each node executes processing for switching reasons that have not been present, so much time is required until the network is controlled to the normal state.

GB 2.286.745 A relates to a telecommunications network including a channel switching protection arrangement and in particular relates to a way of identifying a channel, section, path or the like it can be switched remotely in an SDH (Synchronous Digital Hierarchy) network. The SDH (Synchronous Digital Hierarchy) telecommunications network comprises a plurality of interconnected nodes. Working channels are defined between respective pairs of nodes with one common protection channel serving a plurality of working channels such that in the event of a fault on a working channel traffic signals passing from a first node to a second node along that working channel are switched onto the protection channel. The first node is then operative to transmit a channel trace signal along with the traffic signals which serves to identify the respective channel. The second node is operative to monitor for the presence of a channel trace signal on the protection channel for which it is the terminating node and upon detection thereof to switch traffic signals associated with that trace signal on the protection channel into the said second node for connection to an onward destination.

It is the object of the present invention to provide a part-time traffic connection control method which prevents any connection error, and a transmission apparatus therefor.

It is the other object of the present invention to provide a control method of quickly controlling a network to the normal state without causing any connection error of a traffic in a simultaneous restoration event of a ring network system.

In order to achieve the first object, according to the present invention, there is provided a part-time traffic connection control method for a ring network system which has a plurality of transmission apparatuses and transmission paths having redundancy structure by working channels and protection channels and connecting the plurality of transmission apparatuses in a ring configuration to form a ring network, each of the plurality of transmission apparatuses having a function of switching the working channels/protection channels of the transmission paths when a failure occurs in the ring network, comprising the first step of, when the working channels/protection channels of the transmission paths must be switched, sending part-time traffic connection requests from adjacent transmission apparatuses on both sides of a segment where a transmission path switching reason is present to opposing ones of the adjacent transmission apparatuses after switching of the working channels/protection channels of the transmission paths is ended, the second step of receiving, by the adjacent transmission apparatuses, the part-time traffic connection requests sent from the opposing ones of the adjacent transmission apparatuses, and the third step of, after completion of the second step, executing part-time traffic reconnection (re-establishment) between the adjacent transmission apparatuses.

According to the present invention, there is also provided a part-time traffic connection control method for a ring network system which has a plurality of transmission apparatuses and a transmission path having redundancy structure by working channels and protection channels and connecting the plurality of transmission apparatuses in a ring configuration to form a ring network, each of the working channel and protection channel transmission paths having bi-directional transmission paths in clockwise and counterclockwise directions, and each of the plurality of transmission apparatuses having a function of switching the working channels/protection channels of the transmission paths when a failure occurs in the ring network, comprising the first step of, when the working channels/protection channels of the transmission paths must be switched, sending a part-time traffic connection request from each transmission apparatus serving as a switching node taking the initiative for transmission path switching through the transmission path in the opposite direction of a segment where a transmission path switching reason is present, after switching of the working channel/protection channel of the transmission path is ended, the second step of receiving, by each transmission apparatus other than the switching node, the part-time traffic connection requests that arrive through the transmission path from both directions, the third step of receiving, by each transmission apparatus as the switching node, the part-time traffic connection request that arrives through the transmission path, and the fourth step of executing part-time traffic reconnection by each transmission apparatus other than the switching nodes after completion of the second step and by each transmission apparatus as the switching node after completion of the third step.

With this arrangement, when part-time traffic interrupted in switching the working channels/protection channels of the transmission paths is to be reconnected, each of the transmission apparatuses for performing this reconnection control can certainly recognize completion of switching of the working channels/protection channels of transmission paths. After that, part-time traffic reconnection is executed. Since each transmission apparatus does not disorderly perform part-time traffic connection, connection error of part-time traffic can be prevented.

The factor which generates the necessity of switching the working channels/protection channels of the transmission paths is not only occurrence of a failure but also switch back following to recovery of failure or transmission path switching for a pending failure following to recovery of high-priority failure of multiple failures. When part-time traffic reconnection control is performed in this case, connection error can be certainly prevented by the above method.

The part-time traffic connection request contains information representing a type of transmission path switching, information representing a transmission apparatus as a transmission destination of the part-time traffic connection request, information representing a transmission apparatus as a transmission source of the part-time traffic connection request, and information representing a direction in which the part-time traffic connection request is transmitted.

When a protection channel transmission path in the failure segment can be used, the part-time traffic connection requests are exchanged between opposing transmission apparatuses using the protection channel transmission path. When a failure also occurs in the protection channel transmission path of the failure segment, the part-time traffic connection requests are transmitted in the reverse directions through protection channel transmission paths in the opposite sides of the failure segment. At this time, the part-time traffic connection requests are exchanged between the opposing transmission apparatuses through a Data Communication Channel (DCC) defined by the ITU-T recommendation G.709, for example.

To realize the above part-time traffic connection control method, according to the present invention, there is provided a transmission apparatus used in a ring network system which has a plurality of transmission apparatuses and a transmission path having redundancy structure by working channels and protection channels and connecting the plurality of transmission apparatuses in a ring configuration to form a ring network, comprising: transmission signal restoration control means for, when a failure occurs in the ring network, switching the working channel/protection channel of the transmission path to restore a transmission signal; transmission means for, when the working channels/protection channels of the transmission paths must be switched, sending a part-time traffic connection request to a transmission apparatus opposing via a segment where a transmission path switching reason is present, after switching of the working channel/protection channel of the transmission path is ended; reception means for receiving the part-time traffic connection request sent from the transmission apparatus opposing via the segment where the transmission path switching reason is present to the own apparatus; and reconnection means for, after the part-time traffic connection request is received by the reception means, executing part-time traffic reconnection (re-establishment) to the transmission apparatus opposing via the segment where the transmission path switching reason is present.

According to the present invention, there is also provided an transmission apparatus used in a ring network system which has a plurality of transmission apparatuses and a transmission path having redundancy structure by working channels and protection channels and connecting the plurality of transmission apparatuses in a ring configuration to form a ring network, each of the working channel and protection channel transmission paths having bi-directional transmission paths in clockwise and counterclockwise directions, comprising: transmission signal restoration control means for, when a failure occurs in the ring network, switching the working channel/protection channel of the transmission path to restore a transmission signal; transmission means for, when the working channels/protection channels of the transmission paths must be switched, and the own apparatus is a transmission apparatus which takes the initiative for transmission path switching, sending a part-time traffic connection request through the transmission path in the opposite direction of a segment where a transmission path switching reason is present, after switching of the working channel/protection channel of the transmission path is ended; reception means for receiving the part-time traffic connection request; and reconnection means for, when the working channels/protection channels of the transmission paths must be switched, if the own apparatus is a transmission apparatus other than a transmission apparatus taking the initiative for transmission path switching, receiving the part-time traffic connection requests that arrive from both directions through the transmission path and then executing part-time traffic reconnection (re-establishment), and if the own apparatus is a transmission apparatus which takes the initiative for transmission path switching, receiving the part-time traffic connection request that arrives through the transmission path and then executing part-time traffic reconnection (re-establishment).

The invention can be more fully understood from the following detailed description when taken in conjunction with the accompanying drawings, in which:
FIG. 1 is a view showing the arrangement of an information communication system according to the first to fourth embodiments of the present invention;
FIG. 2 is a block diagram showing the arrangement of nodes 1 to 6 of the first to fourth embodiments of the present invention;
FIG. 3 is a view showing the flow of traffics in the normal state of the information communication system according to the first and second embodiments of the present invention;
FIG. 4 is a view showing the flow of traffics in the information communication system according to the first embodiment of the present invention after span switching;
FIG. 5 is a view showing the flow of traffics in the information communication system after restoration of failure;
FIG. 6 is a flow chart showing reconnection of a part-time traffic in the information communication system according to the first embodiment of the present invention after occurrence of a span failure;
FIG. 7 is a flow chart showing reconnection of a part-time traffic in the information communication system according to the first embodiment of the present invention after recovery of a span failure;
FIG. 8 is a view showing the transmission/reception sequence of part-time traffic connection requests 61;
FIG. 9 is a view showing examples of message contents of part-time traffic connection requests 61 and 62 in the first and second embodiments of the present invention;
FIG. 10 is a view showing the flow of traffics in an information communication system according to the second embodiment of the present invention after occurrence of a ring failure;
FIG. 11 is a view showing the flow of traffics in the information communication system according to the second embodiment after ring switching;
FIG. 12 is a view showing the flow of traffics in the information communication system according to the second embodiment of the present invention after it executes the transmission/reception sequence of part-time traffic connection requests 62;
FIG. 13 is a view showing the flow of traffics in the information communication system according to the second embodiment after recovery of a failure;
FIG. 14 is a flow chart showing reconnection of a part-time traffic in the information communication system according to the second embodiment of the present invention after occurrence of a ring failure;
FIG. 15 is a flow chart showing reconnection of a part-time traffic in the information communication system according to the second embodiment of the present invention after recovery of a ring failure;
FIG. 16 is a view showing the transmission/reception sequence of the part-time traffic connection requests 62;
FIG. 17 is a view showing the flow of traffics in the normal state of an information communication system according to the third embodiment of the present invention;
FIG. 18 is a view showing the flow of traffics in the third embodiment of the present invention after node failure switching;
FIG. 19 is a view showing the flow of traffics in the third embodiment of the present invention after reestablishment of a part-time traffic is ended;
FIG. 20 is a view showing the flow of traffics in the information communication system according to the third embodiment of the present invention after recovery of a node failure;
FIG. 21 is a view showing the flow of traffics in the information communication system according to the third embodiment of the present invention when a node failure is recovered, and a part-time traffic is reconnected (re-established);
FIG. 22 is a flow chart showing reconnection of a part-time traffic in the information communication system according to the third embodiment of the present invention after occurrence of a node failure;
FIG. 23 is a flow chart showing reconnection of a part-time traffic in the information communication system according to the third embodiment of the present invention after recovery of a node failure;
FIG. 24 is a view showing the transmission/reception sequence of part-time traffic connection requests 63;
FIG. 25 is a view showing the transmission/reception sequence of part-time traffic connection requests 64;
FIG. 26 is a view showing examples of message contents of part-time traffic connection requests 63, 64, and 65 in the third and fourth embodiments of the present invention;
FIGS. 27A to 27D are views showing various multiple failure occurrence patterns;
FIGS. 28A to 28D are views showing the recovery patterns from multiple failures;
FIG. 29 is a view showing the priority order of switching states defined by the ITU-T recommendation G.841;
FIG. 30 is a view showing the flow of traffics in an information communication system according to the fourth embodiment of the present invention after ring switching is executed against multiple failures;
FIG. 31 is a view showing the flow of traffics in the information communication system according to the fourth embodiment of the present invention when node failure switching is executed against multiple failures;
FIG. 32 is a view showing the flow of traffics after a ring failure or node failure is recovered from the state shown in FIG. 30 or 31;
FIG. 33 is a view showing the flow of traffics after re-establishment of a part-time traffic is executed from the state shown in FIG. 32;
FIG. 34 is a flow chart showing reconnection of a part-time traffic in the information communication system according to the fourth embodiment of the present invention after recovery of multiple failures;
FIG. 35 is a view showing the transmission/reception sequence of part-time traffic connection requests 65;
FIG. 36 is a block diagram showing the arrangement of an information communication system being a first and second example useful for understanding the present invention;
FIG. 37 is a functional block diagram showing the arrangement of each of transmission apparatuses N1 to Nm according to the first example;
FIG. 38 is a functional block diagram showing the arrangement of each of monitor control apparatuses WS1 to WSm according to the first example;
FIG. 39 is a view showing the logical arrangement of the information communication system according to the first example;
FIG. 40 is a view showing the message sequence between a monitor control apparatus WS1 and transmission apparatuses N1 to N3 in the first example;
FIG. 41 is a functional block diagram showing the arrangement of each of transmission apparatuses n1 to nm according to the second example;
FIG. 42 is a functional block diagram showing the arrangement of each of monitor control apparatuses ws1 to wsm according to the second example;
FIG. 43 is a view showing the message sequence between the monitor control apparatus ws1 and transmission apparatuses n1 to n3 in the second example;
FIG. 44 is a block diagram showing the arrangement of a ring network system to which a control method according to a third example useful for understanding the present invention is applied;
FIG. 45 is a view showing a state transition after FS-R switching requests in two segments are simultaneously released until the network is controlled to the normal state by the control method of the example;
FIG. 46 is a view showing request output contents of nodes shown in FIG. 45;
FIG. 47 is a view showing request output contents of nodes shown in FIG. 45;
FIG. 48 is a view showing request output contents of nodes shown in FIG. 45;
FIG. 49 is a block diagram showing the normal control state of the network based on the network arrangement shown in FIG. 44;
FIG. 50 is a block diagram showing the network control state at times TT1, TT2, and TT3 in FIG. 45;
FIG. 51 is a block diagram showing the network control state at time TT4 in FIG. 45; and
FIG. 52 is a block diagram showing the network control state at time TT5 in FIG. 45.

### (First Embodiment)

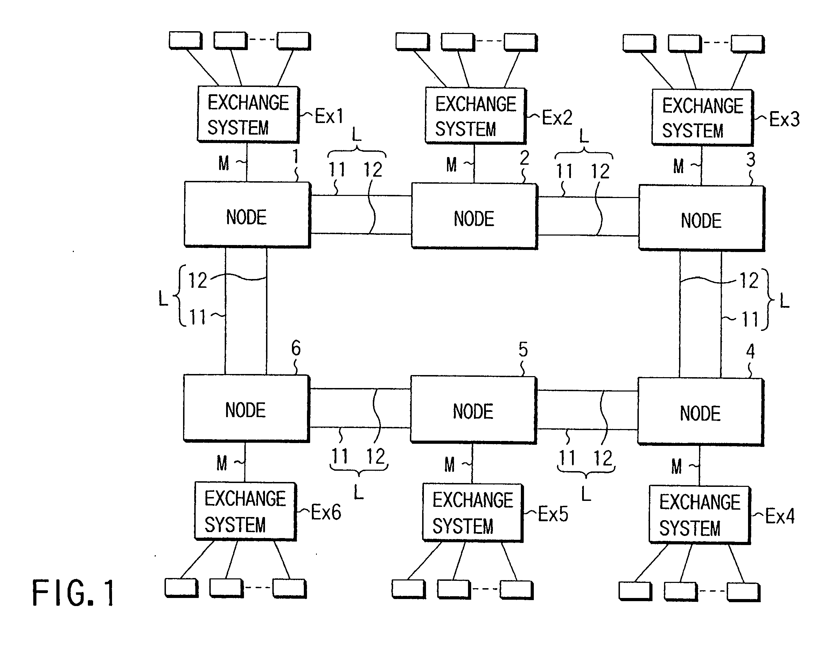

The first embodiment of the present invention will be described below in detail with reference to FIGS. 1 to 9.

FIG. 1 shows the arrangement of an information communication system according to the first embodiment of the present invention. In this information communication system, a plurality of nodes 1 to 6 are connected in a ring configuration through a high-speed line L. Each of the nodes 1 to 6 extracts information addressed to the node itself from multiplexed information transmitted through the high-speed line L, drops the information to a communication apparatus on the low-speed line side, e.g., a corresponding one of exchange systems EX1 to EX6, through a low-speed line M, and also adds information sent from a corresponding one of the exchange systems EX1 to EX6 to the high-speed line L. The exchange systems EX1 to EX6 are also connected to equipment (not shown) such as subscriber exchange systems on the low-speed line side.

The high-speed line L has a working channel transmission path 11 and protection channel transmission path 12, so the information communication system has a so-called double ring network arrangement. The working channel transmission path 11 is mainly used for communication of service traffic. The protection channel transmission path 12 is used as the protection channel of the working channel transmission path 11 when a failure occurs in the working channel transmission path 11. When no failure occurs in the working channel transmission path 11, the protection channel transmission path 12 is used as a transmission path for transmitting part-time traffic. The working channel transmission path 11 has clockwise and counterclockwise transmission paths formed from different fibers. The protection channel transmission path 12 also has clockwise and counterclockwise transmission paths formed from different fibers.

The high-speed line L is for example a multiplexed line such as STM-16 standardized in the SDH, in which signals to be transmitted through communication paths set between the nodes 1 to 6 are time division multiplexed.

For example, the node 1 receives a high-speed time division multiplexed signal transmitted from the node 6, drops a channel addressed to the node itself from the high-speed line L, and outputs the channel to the low-speed line M. A signal transmitted from the low-speed line M of the own node is added to a time division multiplexed signal of another channel, and the high-speed time division multiplexed signal is output to the next node 2. The node 1 also drops a signal from a high-speed time division multiplexed signal transmitted from the node 2, i.e., a signal in the reverse direction, to the low-speed line M of the own node or adds a signal to the time division multiplexed signal and outputs the signal to the node 6.

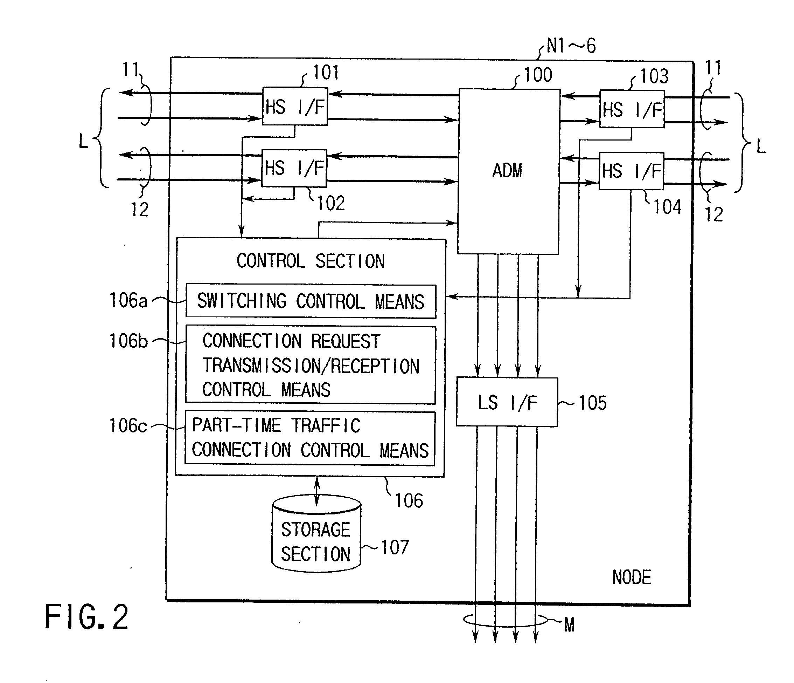

FIG. 2 shows the arrangement of each of nodes N1 to N6 functioning as transmission apparatuses. Each of the nodes N1 to N6 has an add/drop multiplexer (ADM) 100. Synchronous transmission data transmitted through the high-speed line L are received by the add/drop multiplexer (ADM) 100 through high-speed interface sections (HS I/F) 101 to 104 and also dropped to the low-speed line M side through a low-speed interface section (LS I/F) 105. In addition, synchronous transmission data input from the low-speed line M side are received by the add/drop multiplexer (ADM) 100 through the interface section 105 and added to the high-speed line L.

Operation control for the add/drop multiplexer (ADM) 100 is performed by a control section 106 on the basis of information supplied from the high-speed interface sections (HS I/F) 101 to 104. Data associated with various control operations are stored in a storage section 107.

The control section 106 is realized by, e.g., a microcomputer and comprises, in addition to known communication and control means for information communication with another node, a switching control means 106a, a connection request transmission/reception control means 106b, and a part-time traffic connection control means 106c.

When a failure occurs on the working channel transmission path of the ring network, the switching control means 106a transmits/receives APS bytes on the basis of a procedure defined by the ITU-T recommendation G.841 to switch between the working channel and protection channel of the transmission paths, thereby executing a transmission signal recovery control function (one of the APS functions) of restoring the service traffic. The connection request transmission/reception control means 106b controls a function of transmitting/receiving a part-time traffic connection request to/from another node on the network. The part-time traffic connection control means 106c controls connection of a part-time traffic for a transmission channel of a protection channel transmission path, which is not used for switching the service traffic.

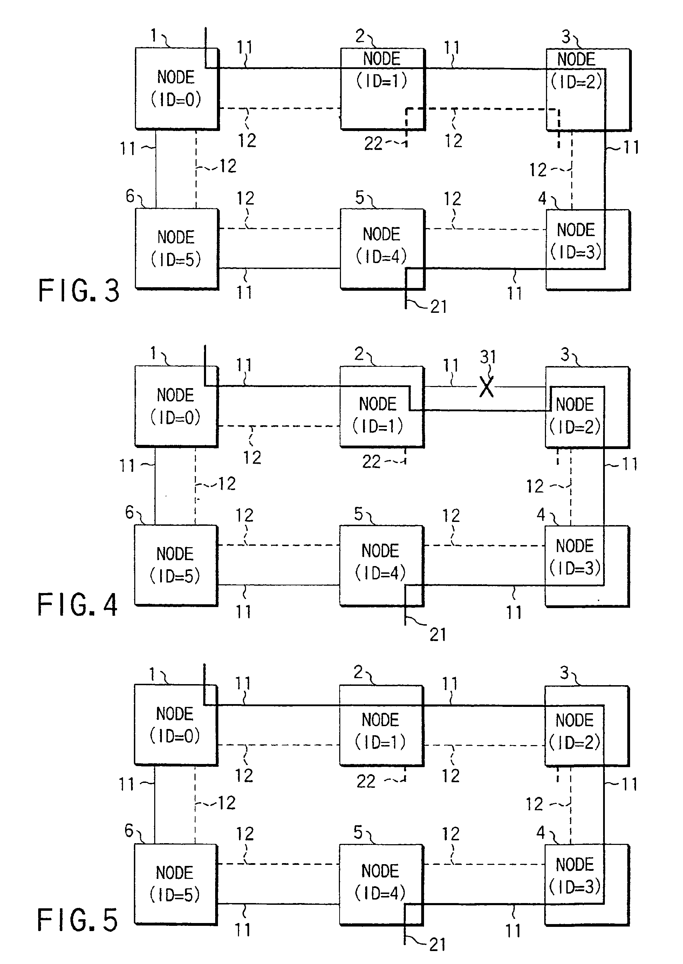

The operation of the information communication system with the above arrangement will be described next with reference to FIGS. 3 to 9. Identification numbers (IDs) 0 to 5 are assigned to the nodes 1 to 6, respectively. A case wherein a service traffic 21 is sent from the node 1 through the nodes 2, 3, and 4 and dropped at the node 5 from the high-speed line to the low-speed line, and simultaneously, a part-time traffic 22 is transmitted using the protection channel transmission path 12 between the node 2 (ID = 1) and node 3 (ID = 2), as shown in FIG. 3, will be described. In FIGS. 3 to 5, the working channel transmission path 11 is indicated by a solid line, and the protection channel transmission path 12 is indicated by a broken line. In addition, a transmission path through which a service traffic flows is indicated by a bold solid line, and a transmission path through which a part-time traffic flows is indicated by a bold broken line.

The part-time traffic 22 is transmitted between adjacent nodes. However, the present invention is not limited to this. The part-time traffic 22 may be transmitted through the protection channel transmission path 12 between nodes that are not adjacent to each other.

In the state shown in FIG. 3, when a failure 31 occurs in the working channel transmission path 11 in the section between the nodes 2 and 3 (S1), the nodes 2 and 3 at the two ends of the failure segment operate as switching nodes for performing span switching according to the ITU-T recommendation G.841. Span switching means that when a failure occurs in the working channel transmission path in a certain segment, the transmission path in that segment is switched from the working channel transmission path to protection channel transmission path to continue communication. The node 2 (ID = 1) and node 3 (ID = 2) temporarily interrupt the part-time traffic 22 to make the protection channel transmission path 12 free (S2). Next, as shown in FIG. 4, the service traffic 21 is switched from a transmission channel of the working channel transmission path 11 in the segment where the failure 31 has occurred to a transmission channel of the protection channel transmission path 12 prepared in the failure segment (S3).

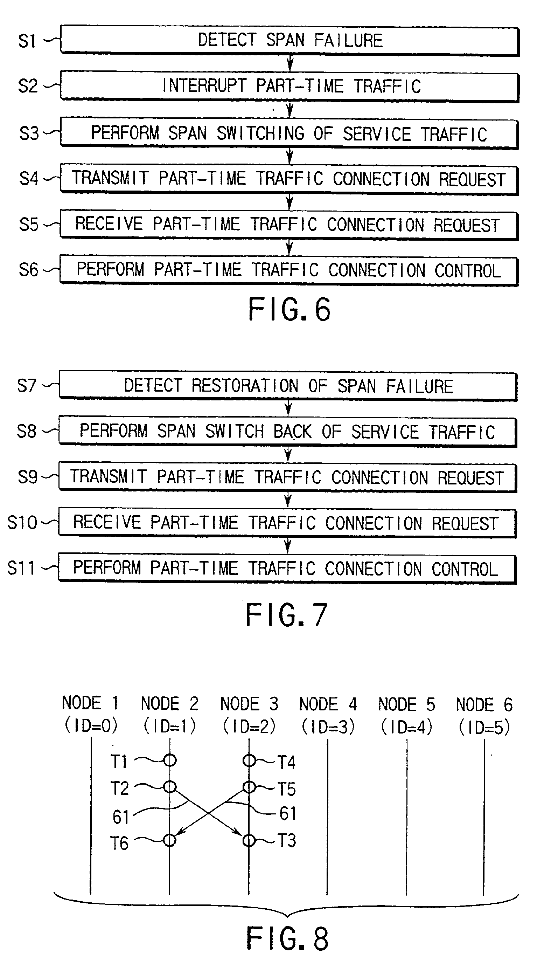

After span switching is ended, as shown in FIG. 4, the nodes 2 and 3 as switching nodes execute the transmission/reception sequence of part-time traffic connection requests 61 shown in FIG. 8. After span switching is ended at times T1 and T4, the nodes 2 and 3 send part-time traffic connection requests 61 to the counterpart nodes at times T2 and T5 (S4). After this, the nodes 2 and 3 receive the part-time traffic connection requests 61 sent from the counterpart nodes at times T3 and T6 (S5).

Upon receiving the part-time traffic connection requests 61, the nodes 2 and 3 confirm completion of span switching between the nodes 2 and 3 and execute connection control of the part-time traffic 22 which is being interrupted (S6). If all channels of the protection channel transmission path 12 have already used to transmit the service traffic 21 after span switching as shown in FIG. 4, actual connection of the part-time traffic 22 is not performed, so the flow of traffics shown in FIG. 4 does not change. On the other hand, when one of the channels of the protection channel transmission path 12 is not used to transmit the service traffic 21, transmission of the part-time traffic 22 is resumed using that channel.

This operation is possible because the high-speed line L as an STM-16 line is multiplexed. More specifically, an STM-16 line can be expressed as a bundle of 16 STM lines having a transfer rate of, e.g., 155.52 Mb/s. Normally, all of these lines are not always used, and some channels are free. Hence, using a free channel, the part-time traffic 22 can be transmitted.

When the failure 31 is recovered from the state after span switching (S7), the nodes 2 and 3 switch back span switching. As shown in FIG. 5, the service traffic 21 is switched back from the transmission channel of the protection channel transmission path 12 in the failure segment to the initially set transmission channel of the working channel transmission path 11 (S8).

After span switching is ended as shown in FIG. 5, the nodes 2 and 3 resume transmission of the part-time traffic 22, which has been interrupted. To do this, the nodes 2 and 3 execute the transmission/reception sequence of the part-time traffic connection requests 61 shown in FIG. 8 again. More specifically, when switch back of span switching is ended at times T1 and T4, the nodes 2 and 3 send the part-time traffic connection requests 61 to the opposing nodes (S9) at times T2 and T5. At times T3 and T6, the nodes 2 and 3 receive the part-time traffic connection requests 61 (S10).

At times T3 and T6, the nodes 2 and 3 confirm completion of switch back of span switching between the nodes 2 and 3 and execute part-time traffic connection control (S11). With this operation, the flow of traffics in the normal state shown in FIG. 3 is restored again. If transmission of the part-time traffic 22 has been resumed using one of channels of the protection channel transmission path 12, which are not used for transmission of the service traffic 21, the part-time traffic connection sequence may be omitted.

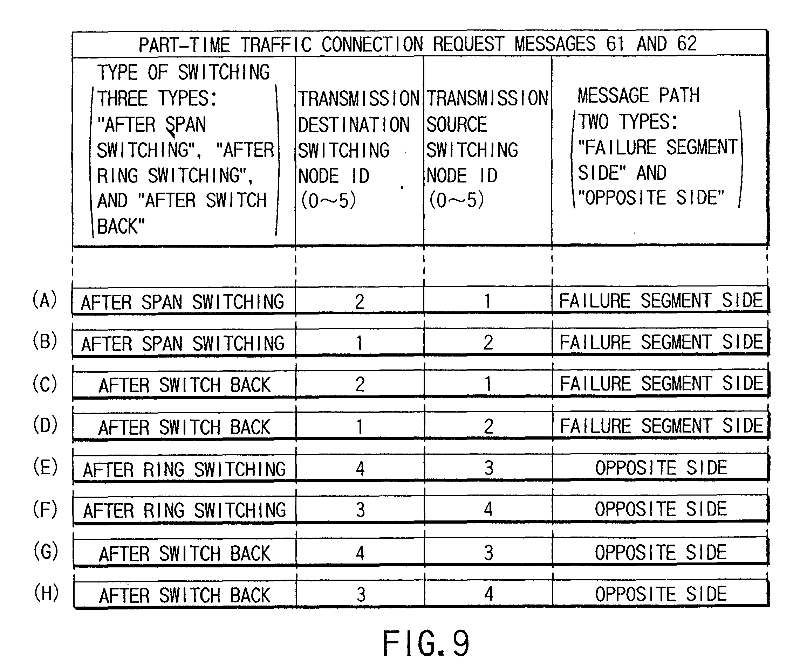

FIG. 9 shows examples of message contents of the part-time traffic connection request 61. This part-time traffic connection request 61 is transmitted/received through, e.g., the DCC of an SDH transmission frame. The part-time traffic connection request 61 is a message containing four pieces of information, i.e., the type of switching, switching node ID of the transmission source, switching node ID of the transmission destination, and message path, which are defined by predetermined bit strings. As the information representing the type of switching, three types of information representing "after span switching", "after ring switching", and "after switch back" are used. As the information representing the message path, two types of information representing "path on failure segment side" and "path on opposite side of failure segment" are used. As described above, span switching means switching of a traffic in a failure segment from the working channel transmission path passing through the failure segment to the protection channel transmission path passing through the failure segment. Ring switching means switching of a traffic in a failure segment from the working channel transmission path passing through the failure segment to the protection channel transmission path that does not pass through the failure segment. Switch back means returning span switching or ring switching to the state before switching. "Path on failure segment side" means a path including the failure segment, and "path on opposite side of failure segment" means a path that does not include the failure segment.

In the above control process, in the sequence after span switching in FIG. 8, the node 2 sends a message (A) in FIG. 9, and the node 3 sends a message (B). In the sequence after span switch back in FIG. 8, the node 2 sends a message (C), and the node 3 sends a message (D).

As described above, in the first embodiment, when a failure has occurred, the nodes 2 and 3 at the two ends of the failure segment execute span switching first and wait for completion of span switching. When span switching is ended at times T1 and T4, the nodes 2 and 3 transmit the part-time traffic connection requests 61 to the opposing nodes at times T2 and T5. After times T3 and T6 when the nodes 2 and 3 receive the part-time traffic connection requests 61 from the opposing nodes, part-time traffic switching connection is executed. For this reason, the two nodes can certainly recognize completion of span switching at the opposing nodes, and connection error of a part-time traffic can be prevented. This also applies to span switch back.

### (Second Embodiment)

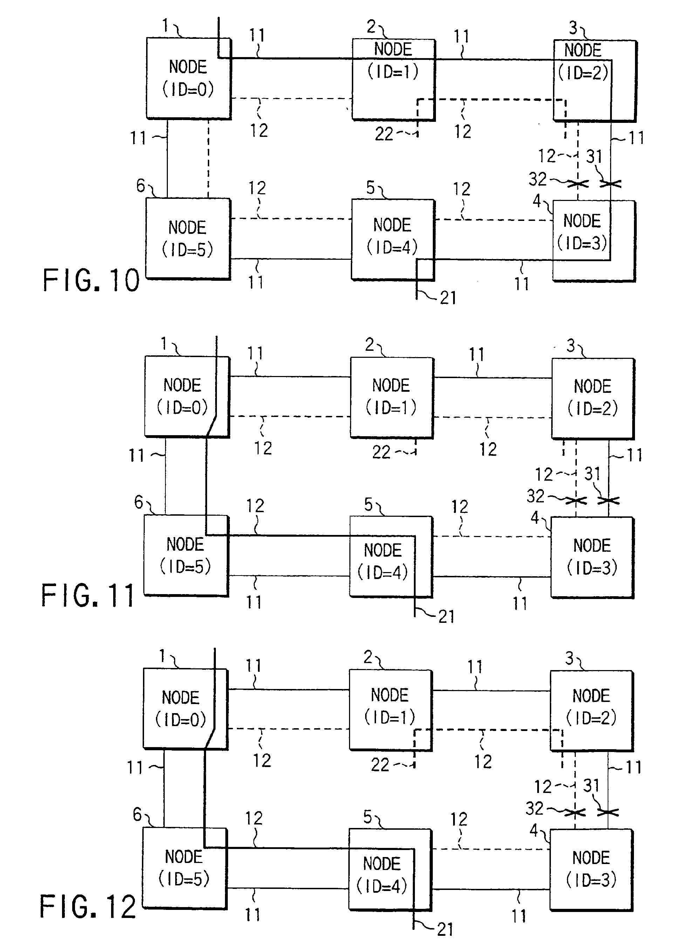

The second embodiment of the present invention will be described next with reference to FIGS. 10 to 16. The same reference numerals as in the first embodiment denotes the same parts in the second embodiment. In FIGS. 10 to 13, a working channel transmission path 11 is indicated by a solid line, and a protection channel transmission path 12 is indicated by a broken line. In addition, a transmission path through which a service traffic flows is indicated by a bold solid line, and a transmission path through which a part-time traffic flows is indicated by a bold broken line. The second embodiment assumes a case wherein when a service traffic 21 is transmitted between nodes 1 and 5 via nodes 2, 3, and 4, and a part-time traffic 22 is transmitted between the nodes 2 and 3, failures (31 and 32) occur in both the working channel transmission path 11 and protection channel transmission path 12 between the nodes 3 and 4, as shown in FIG. 10, as described above with reference to FIG. 3.

In this case, information transmission between the nodes 3 and 4 is disabled, and the failures cannot be avoided by span switching described in the first embodiment, in which the working channel transmission path 11 in the failure segment is switched to the protection channel transmission path 12. For this reason, ring switching is cooperatively performed by the nodes 1 to 6 of the entire system (S101). The nodes 3 and 4 at the two ends of the failure segment operate as switching nodes for performing ring switching in accordance with the ITU-T recommendation G.841 and execute transoceanic ring switching defined by the recommendation.

For ring switching, first, transmission of the part-time traffic 22 between the node 3 as a switching node and the node 2 as an adjacent node is interrupted (S102). After this, in the nodes 1 and 5 where the service traffic 21 is added/dropped, a transmission channel of the working channel transmission path 11 passing through the nodes 2, 3, and 4 is switched to a transmission channel of the protection channel transmission path 12 passing through the node 6 to change the transmission path of the service traffic 21, as shown in FIG. 11 (S1-03).

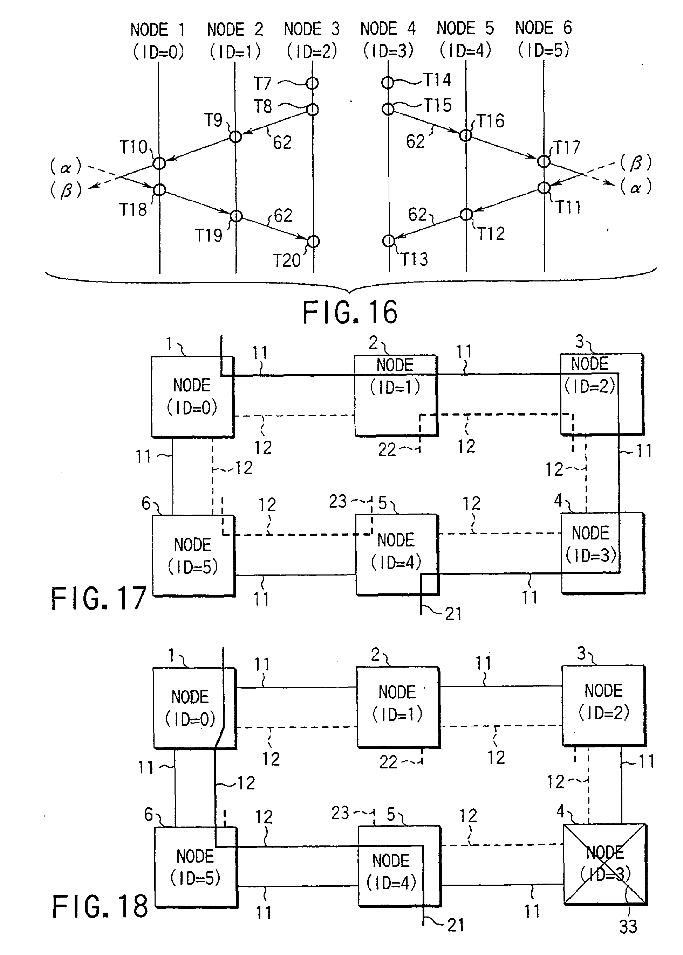

When ring switching of the service traffic 21 is ended, as shown in FIG. 11, the nodes 3 and 4 transmit part-time traffic connection requests 62 to the opposite side of the failure segment. FIG. 16 is a view showing the transmission/reception sequence of the part-time traffic connection requests 62. After ring switching of the service traffic 21 at times T7 and T14, the switching nodes 3 and 4 send the part-time traffic connection requests 62 to the opposing nodes at times T8 and T15 (S104) and also receive the part-time traffic connection requests 62 sent from the opposing nodes through the nodes 1, 2, 5, and 6 as intermediate nodes (S105).

Upon receiving the part-time traffic connection requests 62 at time T13 and T20, the nodes 3 and 4 confirm completion of ring switching in the failure segment and execute part-time traffic connection control (S106). The nodes 1, 2, 5, and 6 as the intermediate nodes of ring switching transfer the part-time traffic connection request 62 to the next nodes at times T9, T10, T16, and T17 when one of the part-time traffic connection requests 62 sent from the nodes 3 and 4 is received.

At times T11, T12, T18, and T19 when the part-time traffic connection request 62 sent from the other switching node is received, the nodes 1, 2, 5, and 6 confirm completion of ring switching of all nodes 1 to 6 on the ring network and then execute part-time traffic connection control (S106).

After ring switching shown in FIG. 11, the transmission channel of the protection channel transmission path 12 where the part-time traffic 22 is set before switching is still not used for transmission of restored service traffic. For this reason, when connection control of the part-time traffic 22 is executed, the flow of traffics shown in FIG. 12 is realized. More specifically, when connection control of the part-time traffic 22 is executed after ring switching shown in FIG. 11, the part-time traffic 22 is transmitted through the protection channel transmission path 12 between the nodes 2 and 3, as indicated by a bold broken line in FIG. 12.

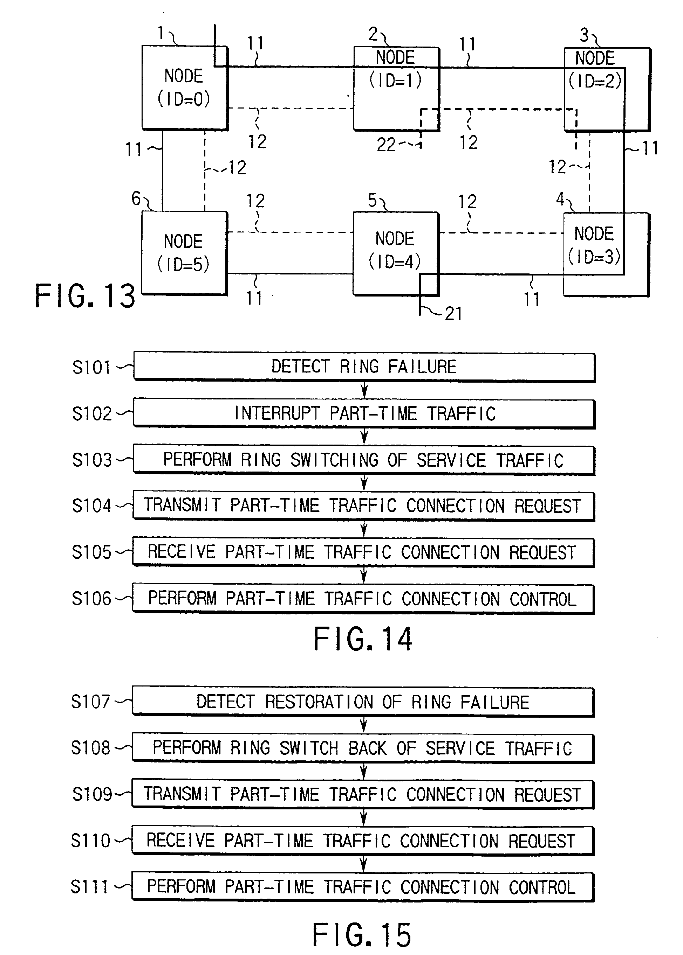

When the failures 31 and 32 are recovered from the state shown in FIG. 12 (S107), the nodes 3 and 4 perform switch back operation of the ring switching. As shown in FIG. 13, the service traffic 21 on the transmission channel of the protection channel transmission path 12 is switched back to the service traffic 21 on the initially set transmission channel of the working channel transmission path 11 in the nodes 1 and 5 where the service traffic 21 is dropped/added (S108).

After switch back of ring switching is ended, the nodes 3 and 4 execute the transmission/reception sequence of the part-time traffic connection requests 62 shown in FIG. 16 again. More specifically, at times T8 and T15, the part-time traffic connection requests 62 are sent (S109). At times T13 and T20, the part-time traffic connection requests 62 are received by the nodes 3 and 4 (S110).

At times T13 and T20, the nodes 3 and 4 confirm completion of switch back of span switching between the nodes 3 and 4 and execute part-time traffic connection control (S111). In this way, the flow of traffics shown in FIG. 13 is restored.

The nodes 1, 2, 5 and 6, which are intermediate nodes of ring switch, receive one of the part-time traffic connection requests 62 sent from the nodes 3 and 4, which are switching nodes of ring switch, at time T9, time 10, time 16 and time 17. The nodes 1, 2, 5 and 6 immediately transfer this request 62, each to the next node.

The nodes 1, 2, 5 and 6 determine that ring-switching back has been completed at all nodes 1 to 6 in the ring network, at time T11, time T12, time T18 and time T19 when they receive a part-time traffic connection request 62 supplied from another switching node. Then, the nodes 1, 2, 5 and 6 control the connection of the part-time traffic connection requests 62 (S111).

FIG. 9 shows examples of message contents of the part-time traffic connection request 62, as in the first embodiment. The part-time traffic connection request 62 is also transmitted/received through the DCC of an SDH transmission frame, for example. In the sequence shown in FIG. 16 after ring switching, the node 3 sends a message (E) in FIG. 9, and the node 4 sends a message (F). In the sequence shown in FIG. 16 after ring switch back, the node 3 sends a message (G), and the node 4 sends a message (H).

As described above, in the second embodiment, when a failure occurs, nodes 3 and 4 at the two ends of the failure segment execute ring switching and wait for completion of ring switching. When ring switching is ended at times T7 and T14, the nodes 3 and 4 transmit the part-time traffic connection requests 62 to the counterpart nodes without passing through the failure segment, i.e., in the reverse directions through the ring network at times T8 and T15. After the nodes 3 and 4 receive the part-time traffic connection requests 62 from the counterparts at times T13 and T20, the nodes 3 and 4 execute part-time traffic switching connection. For this reason, the two nodes can certainly recognize completion of ring switching on the counterpart node, and connection error of a part-time traffic can be prevented. This also applies to ring switch back.

### (Third Embodiment)

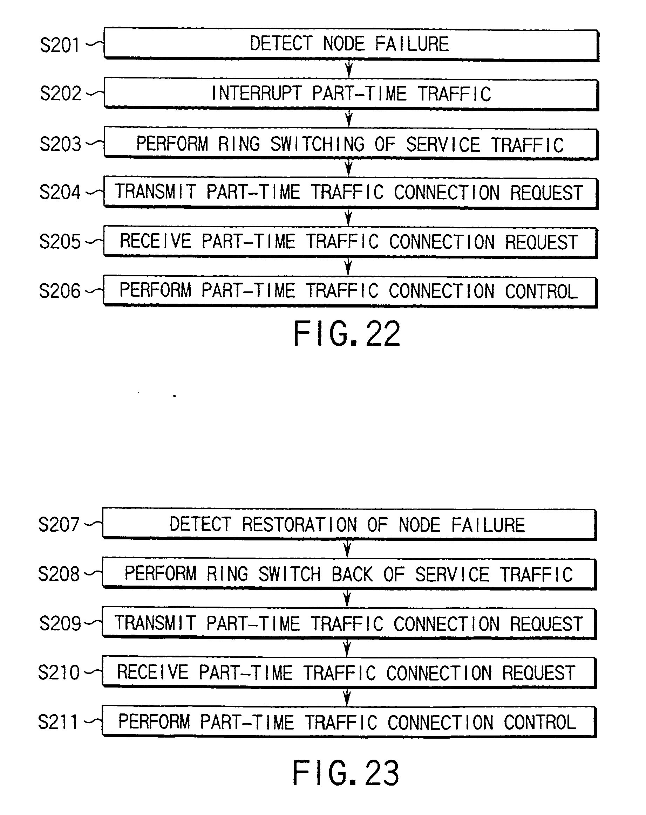

The third embodiment of the present invention will be described next with reference to FIGS. 17 to 26. In the third embodiment, a switching sequence in occurrence of a node failure will be described. The same reference numerals as in the first embodiment denote the same parts in the third embodiment. In FIGS. 17 to 21, a working channel transmission path 11 is indicated by a solid line, and a protection channel transmission path 12 is indicated by a broken line. In addition, a transmission path through which a service traffic flows is indicated by a bold solid line, and a transmission path through which a part-time traffic flows is indicated by a bold broken line. The third embodiment assumes the state shown in FIG. 3 and also a case wherein a part-time traffic 23 is transmitted using the protection channel transmission path 12 between a node 5 (ID = 4) and node 6 (ID = 5). FIG. 17 shows the flow of traffics in the normal state.

In the state shown in FIG. 17, when a node failure 33 occurs in a node 4 (S201), nodes 3 (ID = 2) and 5 (ID = 4) adjacent to the failure node 4 operate as switching nodes for performing node failure switching in accordance with the ITU-T recommendation G. 841. In this case as well, transoceanic ring switching defined by the above recommendation is executed.

For ring switching, first, transmission of part-time traffics 22 and 23 is interrupted (S202). After this, in nodes 1 and 5 where a service traffic 21 is added/dropped, a transmission channel of the working channel transmission path 11 passing through nodes 2, 3, and 4 is switched to a transmission channel of the protection channel transmission path 12 passing through the node 6 to change the transmission path of the service traffic 21, as shown in FIG. 18 (S203).

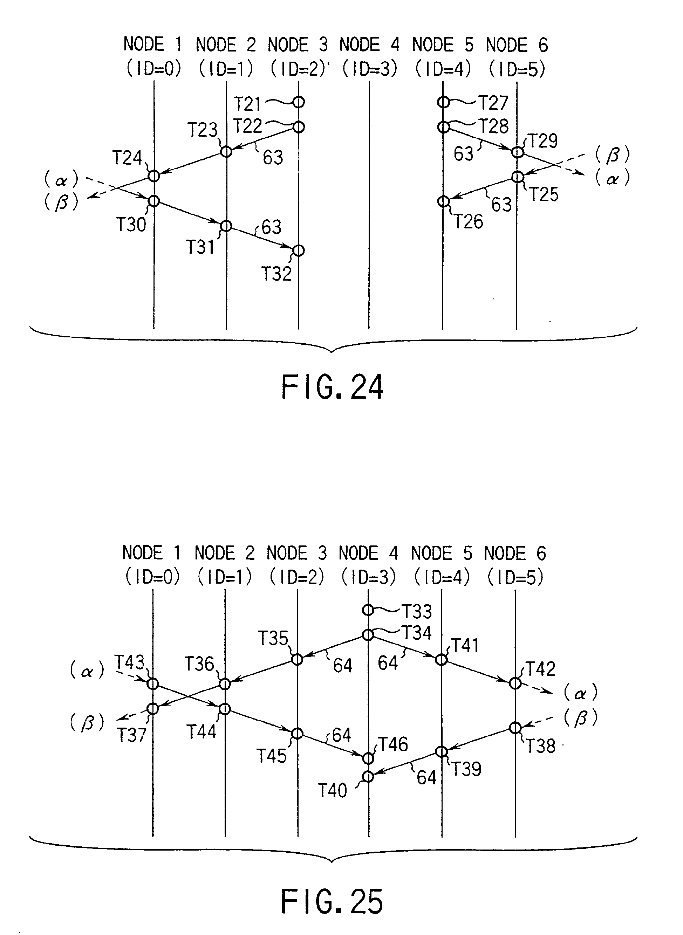

After ring switching of the service traffic 21 is ended, as shown in FIG. 18, the nodes 3 and 5 transmit part-time traffic connection requests 63 to the opposite sides of the failure segment. FIG. 24 is a view showing the transmission/reception sequence of the part-time traffic connection requests 63. The nodes 3 and 5 send the part-time traffic connection requests 63 to the counterpart nodes at times T22 and T28 (S204). The nodes 3 and 5 receive the part-time traffic connection requests 63 sent from the opposing nodes through the nodes 1, 2, and 6 as intermediate nodes (S205).

At times T26 and T32 when the part-time traffic connection requests 63 are received, the nodes 3 and 5 confirm completion of ring switching in the failure segment and execute part-time traffic connection control in the respective nodes (S206).

The nodes 1, 2, and 6 as intermediate nodes of ring switching transfer one part-time traffic connection request 63 at times T23, T24, and T29 when one of the part-time traffic connection requests 63 sent from the switching nodes 3 and 5 for ring switching is received.

At times T25, T30, and T31 when the part-time traffic connection request 63 sent from other switching node is received, the nodes 1, 2, and 6 confirm that the nodes 1, 2, 3, 5, and 6 on the ring network end ring switching and execute part-time traffic connection control (S206).

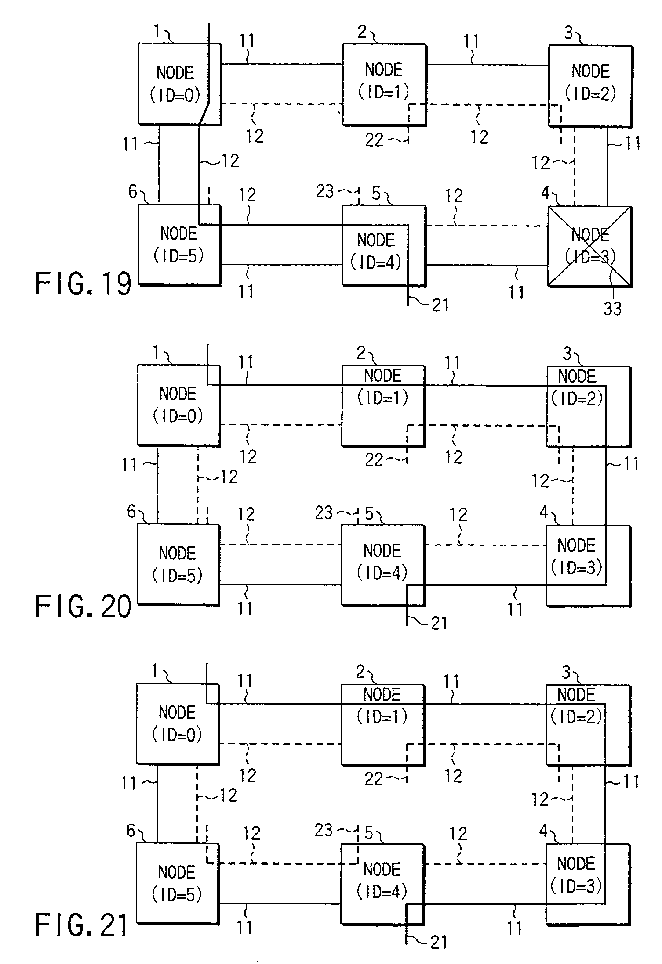

After node failure switching shown in FIG. 18, the transmission channel of the protection channel transmission path 12 where the part-time traffic 22 and 23 are set before switching is still not used for transmission of restored service traffic. For this reason, when connection control of the part-time traffic 22 is executed, the flow of traffics shown in FIG. 19 is realized. More specifically, when connection control of the part-time traffic 22 is executed after node failure switching shown in FIG. 18, transmission of the part-time traffic 22 through the protection channel transmission path 12 between the nodes 2 and 3 is resumed, as indicated by a bold broken line in FIG. 19. When one of the channels of the protection channel transmission path 12 between the nodes 5 and 6 is not used to transmit the service traffic 21, transmission of the part-time traffic 23 is resumed using that channel.

When the node failure 33 is recovered from the state shown in FIG. 19 (S207), the nodes 3 and 5 switch back node failure switching. As shown in FIG. 20, in the nodes 1 and 5 where the service traffic 21 is added/dropped, the service traffic 21 is switched back from the transmission channel of the protection channel transmission path 12 to the initially set transmission channel of the working channel transmission path 11 (S208).

When switch back of node failure switching is ended, as shown in FIG. 20, the transmission/reception sequence of part-time traffic connection requests 64 shown in FIG. 25 is executed mainly by the node 4. More specifically, after switch back is ended at time T33, the node 4 sends the part-time traffic connection requests 64 to the own nodes clockwise and counterclockwise on the ring network at time T34 (S209). The node 4 receives the part-time traffic connection requests 64 transferred through the nodes 1, 2, 3, 5, and 6 (S210). At time T40 when the part-time traffic connection requests 64 from both paths are received, the node 4 confirms completion of switch back and executes part-time traffic connection control (S211).

At times T35, T36, T41, T42, and T43 when the nodes 1, 2, 3, 5, and 6 that have performed node failure switching receive one of the part-time traffic connection requests 64 (from one direction), the nodes transfer this connection request 64 to the next nodes in the clockwise or counterclockwise transfer direction. At times T37, T38, T39, T44, and T45 when the other connection request 64 is received, the nodes on the ring network confirm completion of node failure switching and execute part-time traffic connection control (S211).

When part-time traffic connection control is executed after completion of switch back of node failure switching, a result shown in FIG. 21 is obtained. In this way, the flow of traffics shown in FIG. 17 is restored.

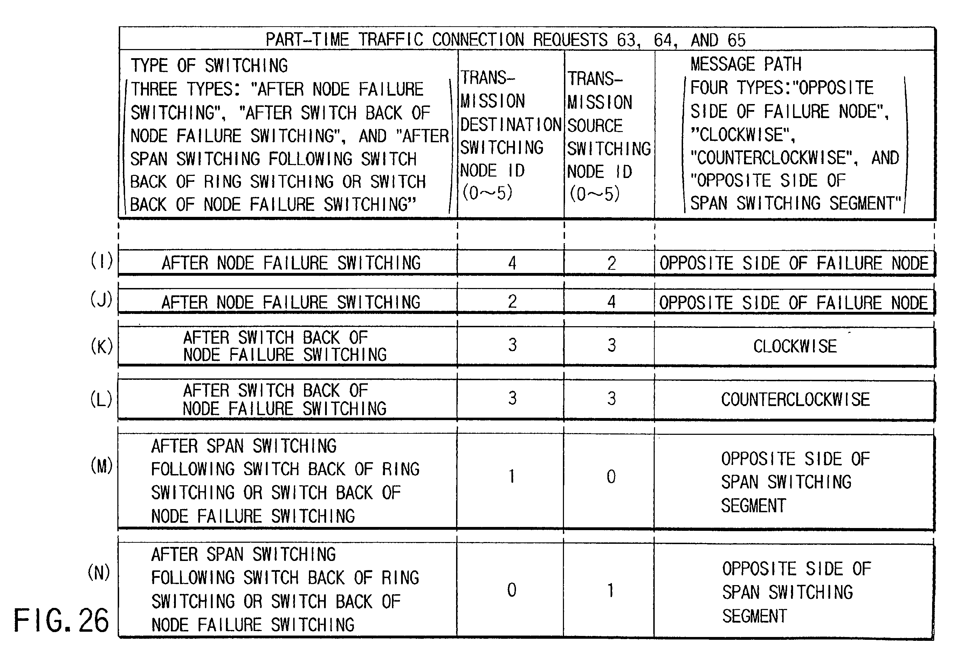

FIG. 26 shows examples of message contents of the part-time traffic connection requests 63 and 64. The part-time traffic connection requests 63 and 64 are also transmitted/received through the DCC of an SDH transmission frame, for example. Each of the part-time traffic connection requests 63 and 64 is a message containing four pieces of information, i.e., the type of switching, switching node ID of the transmission source, switching node ID of the transmission destination, and message path, which are defined by predetermined bit strings. As the information representing the type of switching, three types of information representing "after node failure switching", "after switch back of node failure switching", and "after span switching following switch back of ring switching or switch back of node failure switching" are used. Together with the first and second embodiments, there are six types of information. As the message path, four types of information representing "opposite side of failure node", "clockwise", "counterclockwise", and "opposite side of span switching segment" are used. Hence, together with the first and second embodiments, six pieces of information are used.

In the above control process, in the sequence shown in FIG. 24 after node failure switching, the node 3 (ID = 2) sends a message (I) in FIG. 26, and the node 5 (ID = 4) sends a message (J). In the sequence shown in FIG. 25 after switch back of node failure switching, the node 4 (ID = 3) sends messages (K) and (L).

As described above, in the third embodiment, when a node failure occurs, first, the nodes 3 and 5 adjacent to the failure node execute node failure switching and wait for completion of node failure switching. When node failure switching is ended at times T21 and T27, the two nodes 3 and 5 transmit the part-time traffic connection requests 63 to the opposing nodes without passing through the failure segment, i.e., in the reverse directions through the ring network at times T22 and T28. After times T26 and T32 when the nodes 3 and 5 receive the part-time traffic connection requests 63 from the opposing nodes, the nodes 3 and 5 execute part-time traffic switching connection.

In switch back of node failure, at time T33 when switch back of node failure is ended, part-time traffic switching connection is executed mainly by the restoration node 4. More specifically, after switch back of node failure is ended at time T33, the node 4 transmits the part-time traffic connection requests 64 in both directions through the ring network. After the part-time traffic connection requests 64 from both direction are received at time T40, the node 4 executes part-time traffic switching connection.

With this arrangement, each node can certainly recognize completion of node failure switching and switch back, and connection error of part-time traffic can be prevented.

### (Fourth Embodiment)

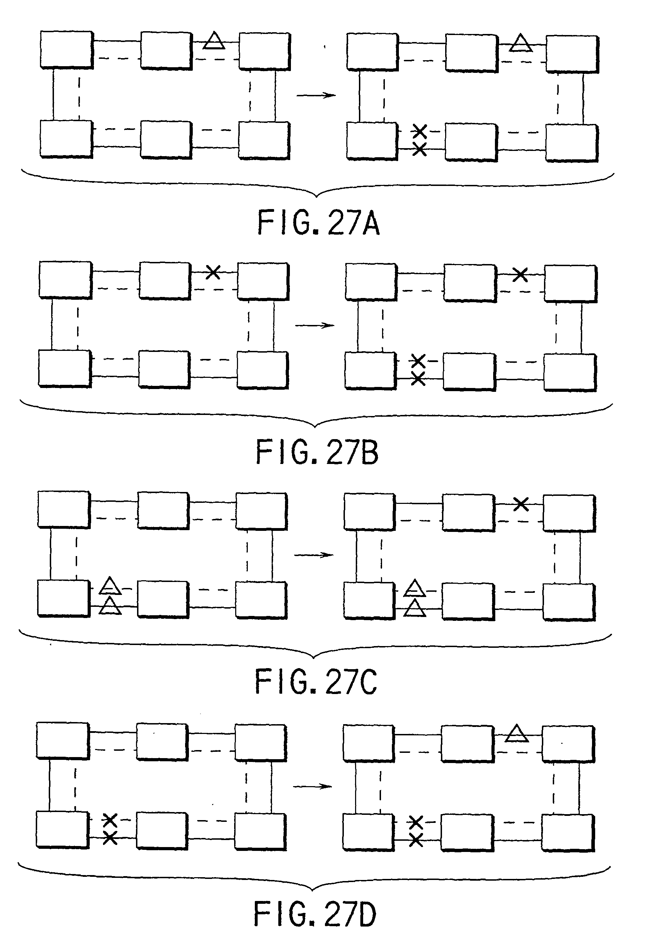

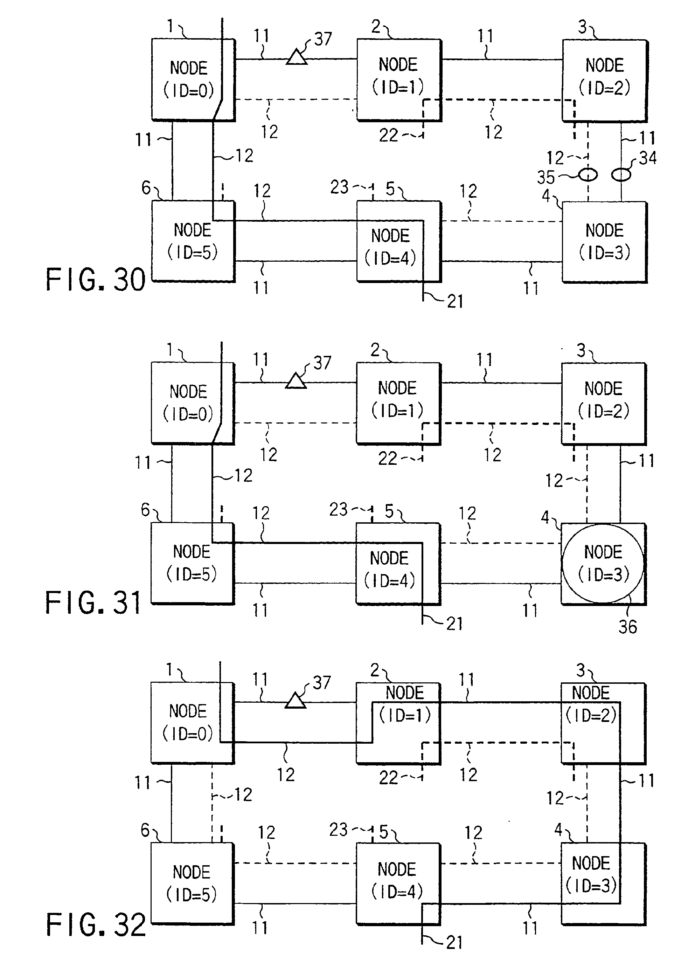

The fourth embodiment of the present invention will be described next with reference to FIGS. 27A to 35. In FIGS. 30 to 34, a working channel transmission path 11 is indicated by a solid line, and a protection channel transmission path 12 is indicated by a broken line. In addition, a transmission path through which a service traffic flows is indicated by a bold solid line, and a transmission path through which a part-time traffic flows is indicated by a bold broken line. In the fourth embodiment, a sequence in transmission path switching and switch back when failures simultaneously occur at a plurality of portions in a ring network (this situation will be referred to as multiple failures hereinafter) will be described. That is, a part-time traffic connection sequence when one failure is recovered from multiple failures will be described.

Multiple failures have various patterns, and the restoration manners also have various patterns. Some of them will be described with reference to FIGS. 27A to 28D.

FIGS. 27A and 27B show a case wherein when a span failure (failure that can be restored by span switching) occurs in the ring network, a ring failure (failure that can be restored by ring switching) further occurs. In FIG. 27A, a failure (Δ in FIG. 27A) that allows signal transmission but makes it difficult to use because of a number of transmission errors occurs in the working channel transmission path of a certain segment, and then, failures (X in FIG. 27A) that disable signal transmission occur in both the working channel transmission path and protection channel transmission path of another segment. That is, "Signal Degrade" (SD) occurs first, and "Signal Fail" (SF) further occurs. In FIG. 27B, SF occurs in the working channel transmission path of a certain segment, and then, SF occurs in another segment. For the descriptive convenience, the initial state is shown on the left side of each figure, and the final state is shown on the right side.

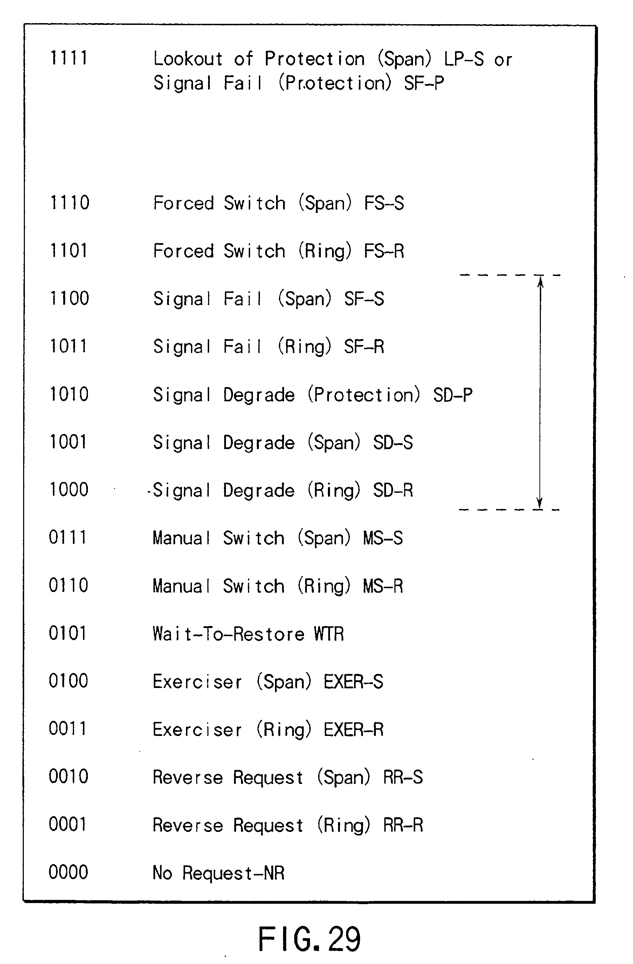

In the final state shown in FIG. 27A, after span switching in the SD segment is switched back, ring switching is executed. This is because a "Signal Fail-Ring" (SF-R) has priority over a "Signal Degrade-Span" (SD-S) according to the definition of the ITU-T recommendation G.841, as will be described later in detail with reference to FIG. 29. Then, if the protection channel transmission path has an unused channel, a part-time traffic is re-established.

In the final state shown in FIG. 27B, transmission path switching for the SF-R is not performed. This is because a "Signal Fail-Span" (SF-S) has priority over an SF-R. Instead, a part-time traffic transmitted through the protection channel transmission path other than the span failure segment is interrupted.

FIGS. 27C and 27D show a case wherein a ring failure in the ring network occurs, and then, a span failure further occurs. In FIG. 27C, SD occurs in the working channel transmission path and protection channel transmission path of a certain segment, and then, SF occurs in the working channel transmission path of another segment. In FIG. 27D, SF occurs in the working channel transmission path and protection channel transmission path of a certain segment, and then, SD occurs in the working channel transmission path of another segment.

In the final state shown in FIG. 27C, after ring switching associated with the SD segment is switched back, span switching is executed. This is because the SF-S has priority over a "Signal Degrade-Ring" (SD-R). Then, if the protection channel transmission path of the span segment has an unused channel, a part-time traffic is re-established. In this case, all part-time traffics other than the span segment are interrupted.

In the final state shown in FIG. 27D, ring switching which is realized in the initial state is continued. This is because the SF-R has priority over SD-S. Additionally, the initial part-time traffic connection state is kept unchanged.

FIG. 29 shows the priority of transmission path switching reasons associated with this description on the basis of the ITU-T recommendation G.841. Each state shown in FIG. 29 is called a "Bridge request code" defined by first four bits of the K1 byte. The entire bridge request codes are called a protection group. Five states SF-S to SD-R are related to this description, which are arranged in descending order of priority as SF-S, SF-R, SD-P, SD-S, and SD-R.

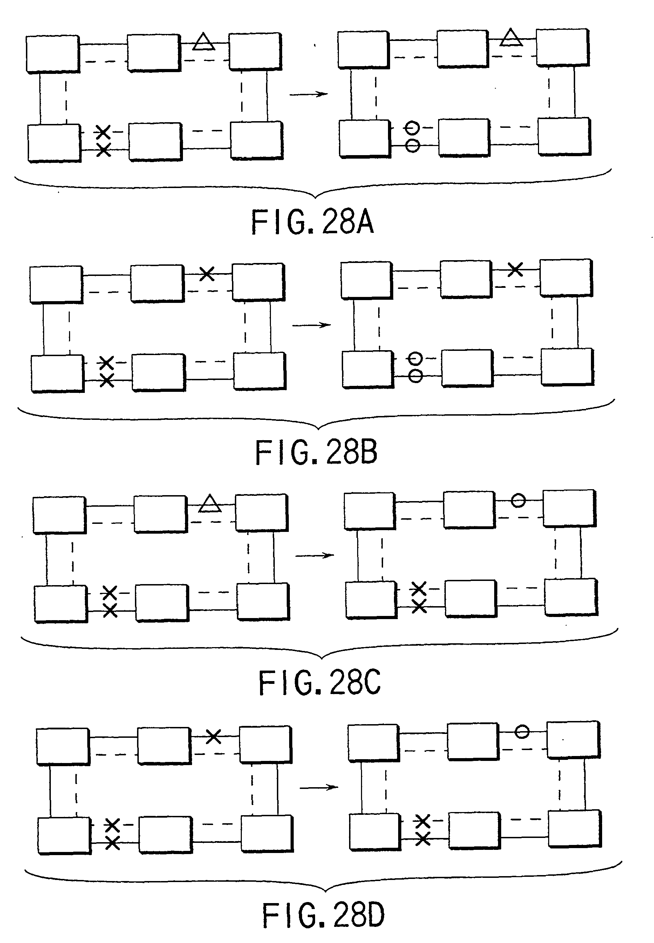

FIGS. 28A to 28D are views showing switching states when failures are recovered (○ in FIGS. 28A to 28D) from the final states shown in FIGS. 27A to 27D. FIGS. 28A and 28B show states wherein ring failures are recovered from multiple failures (span failure and ring failure). FIGS. 28C and 28D show states wherein span failures are recovered.

The initial states shown in FIGS. 28A and 28C correspond to the final states shown in FIGS. 27A and 27D. The initial states shown in FIGS. 28B and 28D correspond to the final state in FIG. 27B.

In the final state shown in FIG. 28A, after ring switching in the SF-R segment is switched back, span switching in the SD segment is executed. After re-establishment of a part-time traffic in the span segment is ended, part-time traffics other than the span segment are re-established.

In the final state shown in FIG. 28B, part-time traffics other then the span segment are re-established while keeping switching state in the span segment.

In the final state shown in FIG. 28C, the initial switching state in the ring network is kept unchanged. This also applies to part-time traffic.

In the final state shown in FIG. 28D, after span switching is switched back, ring switching associated with the SF-R segment is executed. After completion of this ring switching, part-time traffics associated with all protection channel transmission paths in the ring network are re-established.

A part-time traffic reconnection sequence when failures (ring failures) in the working channel transmission path and protection channel transmission path of the segment between a node 3 (ID = 2) and a node 4 (ID = 3) are recovered, or a node failure in the node 4 (ID = 3) is recovered in the ring network of this embodiment will be described. In both cases, assume that SD-S switching in the working channel transmission path of the segment between a node 1 (ID = 0) and a node 2 (ID = 1) is pending before recovery of the failures on the basis of the priority shown in FIG. 29.

FIGS. 30 and 31 are views showing states immediately after a ring failure or node failure is recovered. In the state shown in FIG. 30 or 31, a service traffic 21 is transmitted between the nodes 1 and 5 through a transmission channel of the protection channel transmission path 12 passing through a node 6, and a part-time traffic 22 is transmitted through the protection channel transmission path between the nodes 2 and 3.

When the ring failure or node failure is recovered as shown in FIG. 30 or 31 (S307), the node 1 (ID = 0) and node 2 (ID = 1) at the two ends of the SD holding segment operate as switching nodes for performing span switching according to the ITU-T recommendation G.841. As shown in FIG. 32, the service traffic 21 is switched from a transmission channel of the working channel transmission path 11 in the failure segment to a transmission channel of the protection channel transmission path 12 in the failure segment (S308).

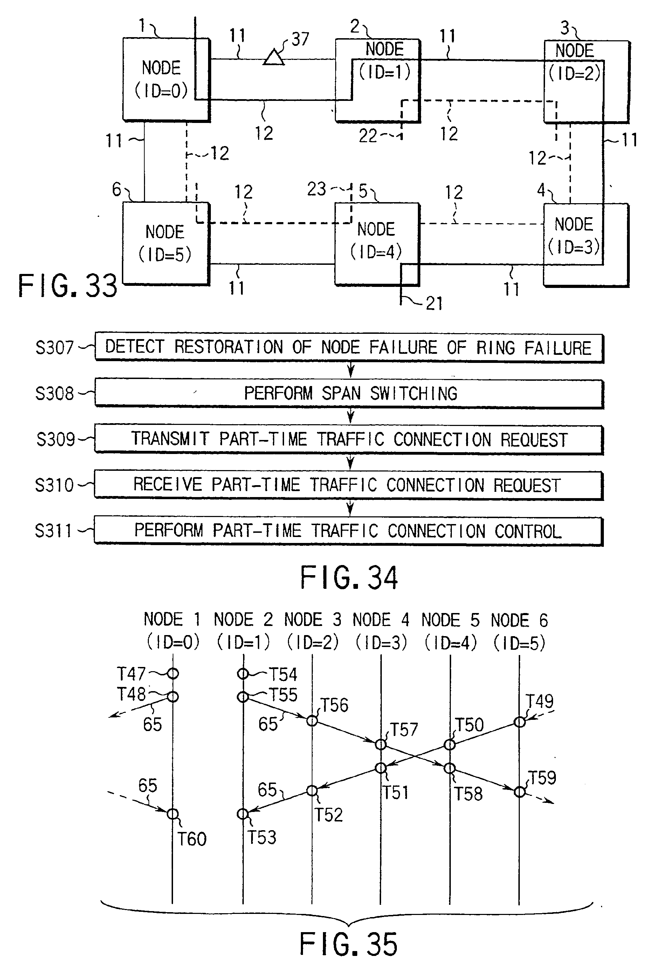

After span switching as shown in FIG. 32 is ended, the nodes 1 and 2 as switching nodes transmit part-time traffic connection requests 65 to the opposite sides of the SD segment. FIG. 35 is a view showing the transmission/reception sequence of the part-time traffic connection requests 65. After span switching is ended at times T47 and T54, the nodes 1 and 2 send the part-time traffic connection requests 65 to the opposing nodes at times T48 and T55 (S309) and also receive the part-time traffic connection requests 65 sent from the counterpart nodes through the nodes 3, 4, 5, and 6 as intermediate nodes (S310).

At times T53 and T60 when the part-time traffic connection requests 65 are received, the nodes 1 and 2 confirm completion of span switching in the failure segment and execute part-time traffic connection control in the respective nodes (S311).

At times T49, T50, T56, and T57 when one of the part-time traffic connection requests 65 sent from the nodes 1 and 2 is received, the nodes 3, 4, 5, and 6 as intermediate nodes transfer one part-time traffic connection request 65 to the counterpart switching node through the remaining intermediate nodes.

At times T51, T52, T58, and T59 when the part-time traffic connection request 65 sent from the other switching node is received, the nodes 3, 4, 5, and 6 confirm completion of span switching by the nodes 1 and 2 and then execute part-time traffic connection control (S311).

After switching for span failure as shown in FIG. 32, the transmission channel of the protection channel transmission path 12 where a part-time traffic 23 is established before switching is kept open. Hence, when connection control of the part-time traffic 23 is executed in this state, the flow of traffics shown in FIG. 33 is realized. More specifically, when connection control of the part-time traffic 23 is executed after switching for span failure, transmission of the part-time traffic 23 through the protection channel transmission path 12 between the nodes 5 and 6 is resumed, as indicated by a bold broken line in FIG. 33.

FIG. 26 shows examples of message contents of the part-time traffic connection request 65. The part-time traffic connection request 65 is also transmitted/received through the DCC of an SDH transmission frame, for example.

For the above control process, in the sequence shown in FIG. 35 after switching for span failure, the node 1 (ID = 0) sends a message (M) in FIG. 26, and the node 2 (ID = 1) sends a message (N).

As described above, in the fourth embodiment, when a ring failure or node failure is recovered from a ring failure switching state with a pending SD-S or node failure switching state with a pending SD-S, the nodes 1 and 2 adjacent to the span failure segment execute SD-S switching and wait for completion of switching. When SD-S switching is ended at times T47 and T54, the nodes 1 and 2 transmit the part-time traffic connection requests 65 to the opposing nodes without passing through the failure segment, i.e., in the reverse direction through the ring network at times T48 and T55. After times (T51, T52, T53, T58, T59, and T60) when the nodes 1 to 6 in the ring network receive the part-time traffic connection requests 65 from both directions, part-time traffic switching connection is executed.

With this arrangement, the nodes can certainly recognize completion of span switching, and connection error of a part-time traffic can be prevented.

The present invention is not limited to the above embodiments. For example, the above embodiments have been described in association with the SDH. However, the present invention can also be applied to the SONET standardized in the U.S.A.. The nodes 1 to 6 are connected through the STM-16 line. However, the nodes may be connected through a line such as an STM-1 or STM-4 with another capacity. The transmission channel of a part-time traffic is not limited to the DCC, and another unused channel of overheads in the SDH frame may be used.

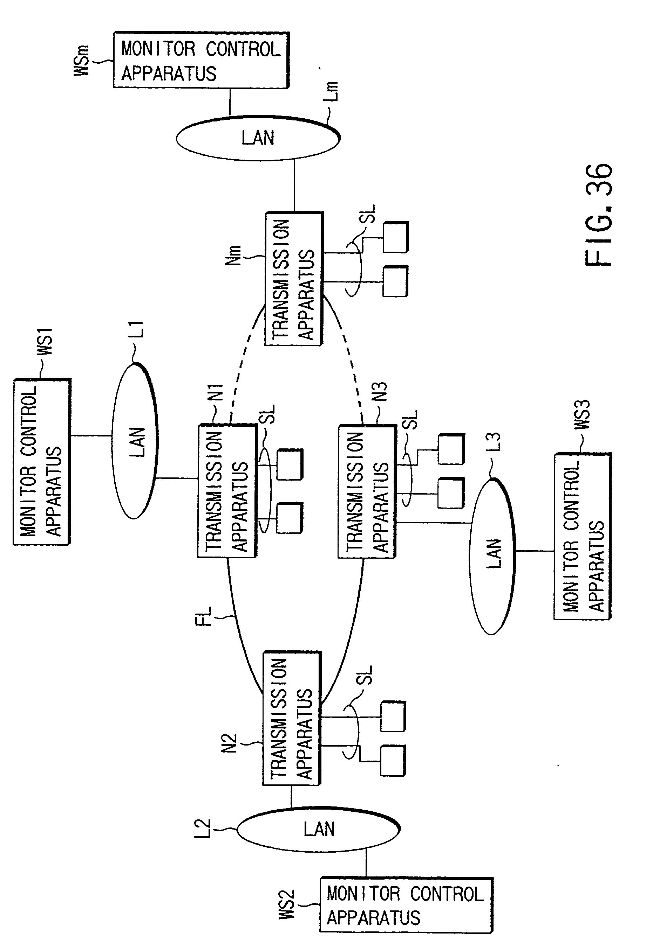

A first example of an information communication system useful for understanding the present invention will be described below in detail with reference to FIGS. 36 to 40.

FIG. 36 is a block diagram showing the arrangement of an information communication system according to the first example. This embodiment assumes a ring network complying with the SDH, in which m transmission apparatuses N1 to Nm are connected in a ring configuration through a high-speed line (e.g., STM-16 line) FL. Each of the transmission apparatuses N1 to Nm drops information of a channel addressed to the apparatus itself from information transmitted through the high-speed line FL to a low-speed line SL and sends the information to a communication apparatus (no reference numeral) such as a exchange system.

The high-speed line FL has clockwise and counterclockwise working channel transmission paths and clockwise and counterclockwise protection channel transmission paths. These four transmission paths are passed through four different fibers. Alternatively, the working channel transmission path and protection channel transmission path may be multiplexed so that the clockwise working channel transmission path and protection channel transmission path are passed through one fiber, and the counterclockwise working channel transmission path and protection channel transmission path are passed through another fiber. Otherwise, the clockwise and counterclockwise working channel transmission paths may be passed through one fiber, and the clockwise and counterclockwise protection channel transmission paths may be passed through another fiber.

The transmission apparatuses N1 to Nm are connected to monitor control apparatuses WS1 to WSm through local area networks (LANs) L1 to Lm, respectively. The monitor control apparatuses WS1 to WSm are realized as, e.g., general-purpose workstations. Any one of the monitor control apparatuses WS1 to WSm can monitor and control the transmission apparatuses N1 to Nm.

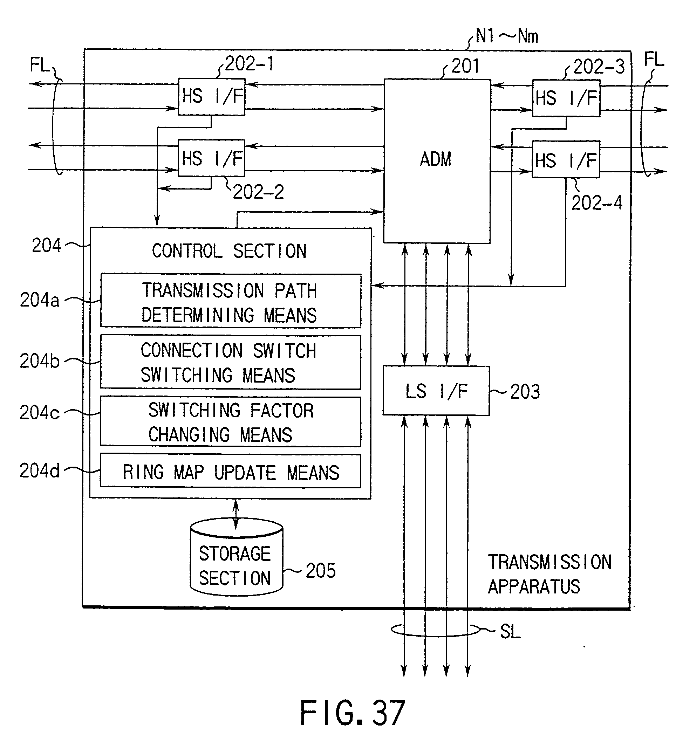

FIG. 37 shows the main arrangement of each of the transmission apparatuses N1 to Nm. Each of the transmission apparatuses N1 to Nm includes an add/drop multiplexer (ADM) 201. Synchronous transmission data transmitted through the high-speed line FL is supplied to the add/drop multiplexer 201 through high-speed interface sections (HS I/Fs) 202-1 to 202-4 and also dropped to the low-speed line SL side through a low-speed interface section (LS I/F) 203. The transmission apparatuses N1 to Nm supply synchronous transmission data input from the low-speed line SL side to the add/drop multiplexer 201 and add the data to the high-speed line FL through the interface section 203.

Operation control for the add/drop multiplexer 201 is performed by a control section 204 on the basis of information supplied from the interface sections 202-1 to 202-4.

The control section 204 is realized by, e.g., a microcomputer and comprises, in addition to known communication and control means for information communication with another transmission apparatus N or monitor control apparatus WS, a transmission path determining means 204a, a connection switch switching means 204b, a transmission path switching reason changing means 204c, and a ring map update means 204d.

The storage section 205 stores the information representing the connection of communication path between all transmission apparatuses and the data associated with various controls such as transmission path switching reasons. The storage section 205 can store a plurality of transmission path switching reasons. Thus, it can store new transmission path switching reasons supplied from the transmission path switching reason changing means 204c and transmission path switching reason supplied from the monitor control apparatus, in addition to the transmission path switching reasons already stored in it.

When a failure occurs, the transmission path switching reason changing means 204c determines a transmission path switching reason, on the basis of the information representing the failure of the self apparatus and the information transferred between the transmission apparatuses by using K1 and K2 bytes. The means 204c determines that one of the transmission path switching reasons stored in the storage section 205 that has the highest priority. The factor thus determined will be used to determine the state of the connection switch of the self apparatus. Further, the transmission path determining means 204a determines the new connection switch state of the transmission path in the self apparatus to restore the traffic, on the basis of the new transmission path switching reason for determining the state of the connection switch, the information stored in the storage section 205 and representing the connection of communication path between all transmission apparatuses, and the current state of the connection switch of the transmission path in the self apparatus.

The transmission path switching reason changing means 204c can add the transmission path switching reason supplied from the monitor apparatus and the new transmission path switching reason (which is generated due to the occurrence of an abnormal situation) to the transmission path switching reasons stored in the storage section 205.

A transmission path switching reason is information to be referred to in switching a connection switch in the self apparatus. Each transmission path switching reason has priority. A transmission path switching reason having highest priority and at least one transmission path switching reason having priority lower than that of the highest-priority switching reason and used as a transmission path switching reason in occurrence of a failure are included. An example of such a transmission path switching reason is the protection group shown in FIG. 29, which is defined by the ITU-T recommendation G.841.

In the normal operation, the connection switch switching means 204b switches the connection switch of the self apparatus in accordance with a connection switch switching request from a monitor control apparatus. In occurrence of a failure, the connection switch switching means 204b switches the connection switch of the self apparatus on the basis of the new connection switch state determined by the transmission path determining means 204a. The APS function defined by the ITU-T recommendation G.841 is realized by the transmission path determining means 204a and connection switch switching means 204b.

A connection switch is used to flow a traffic from the low-speed line to the clockwise or counterclockwise working channel transmission path or clockwise or counterclockwise protection channel transmission path, drop a traffic from the clockwise or counterclockwise working channel transmission path or clockwise or counterclockwise protection channel transmission path to the low-speed line, or pass a traffic sent from an adjacent node to the other adjacent node.

The ring map update means 204d updates a ring map stored in the storage section 205 on the basis of a ring map sent from a monitor control apparatus. The ring map contains communication path connection information between all transmission apparatuses.

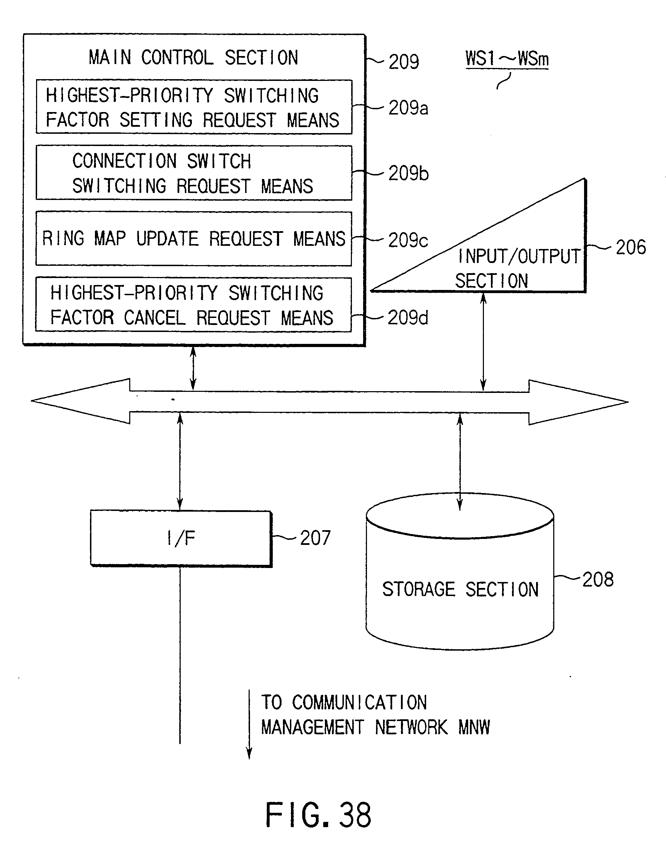

The arrangement of each of the monitor control apparatuses WS1 to WSm will be described next with reference to FIG. 38. Each of the monitor control apparatuses WS1 to WSm comprises an input/output section 206 having a keyboard or display, an interface section (I/F) 207 for realizing an interface function between a communication management network MNW and the monitor control apparatus, a storage section 208 storing a program associated with monitor control, and a main control section 209 for controlling the input/output section 206 and interface section (I/F) 207 on the basis of the control program stored in the storage section 208.

The main control section 209 is realized by, e.g., a microcomputer and comprises, in addition to known communication and control means for information communication with the transmission apparatuses N1 to Nm, a highest-priority switching reason setting request means 209a, a connection switch switching request means 209b, a ring map update request means 209c, and a highest-priority switching reason cancel request means 209d.

The highest-priority switching reason setting request means 209a supplies Lockout of Protection Span to the transmission apparatuses N1 to Nm. Lockout of Protection Span to the transmission apparatuses N1 to Nm. Lockout of Protection Span is the transmission path switching reason that has the highest priority.

The connection switch switching request means 209b requests transmission apparatuses N, which should switch their connection switches because a communication path is passed through or terminated at the apparatuses, to switch the connection switches on the basis of, e.g., operation of the operator.

The ring map update request means 209c generates a ring map after responses representing completion of connection switches are returned from all transmission apparatuses which should switch the connection switches, and transmits the ring map to the transmission apparatuses N1 to Nm.

After completion of ring map update operation in each of the transmission apparatuses N1 to Nm, the highest-priority switching reason cancel request means 209d requests the transmission apparatuses N1 to Nm to cancel the "Lockout Of Protection Span."

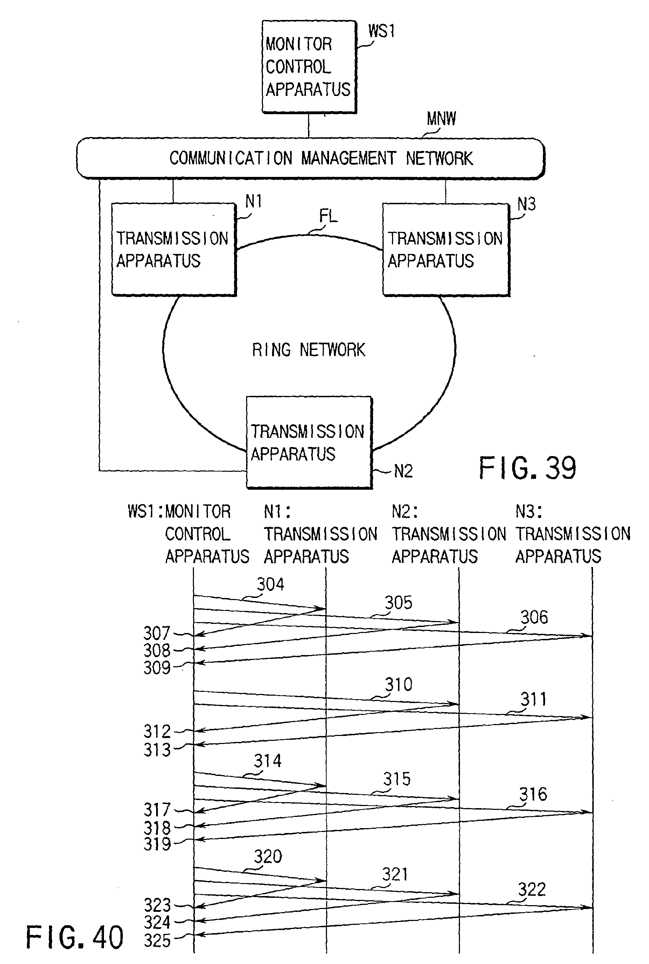

The connection switch switching process in the information communication system with the above arrangement will be described next with reference to FIGS. 39 and 40. FIG. 39 shows the logical arrangement of the information communication system according to the first example. A description will be made below assuming that various control operations associated with connection switch switching are performed for three transmission apparatuses N1 to N3 by the monitor control apparatus WS1, and the transmission apparatuses N2 and N3 should actually switch the connection switches. The communication management network MNW is formed between the monitor control apparatus WS1 and transmission apparatuses N1 to N3 to transfer various control information therebetween.

In the message sequence chart shown in FIG. 40, when communication path setting operation is started, the monitor control apparatus WS1 sends highest-priority switching reason setting request signals 304 to 306 to the transmission apparatuses N1 to N3, respectively, by the highest-priority switching reason setting request means 209a. In response to these signals, the switching reason changing means 204c of each of the transmission apparatuses N1 to N3 stores "Lockout Of Protection Span," as a new transmission path switching reason, in the storage section 205 in addition to the current transmission path switching reason. After this, the transmission apparatuses N1 to N3 return response signals 307 to 309 representing completion of the change to the monitor control apparatus WS1, respectively.

When a failure occurs during switching of connection switches from the monitor control apparatus WS1, the switching reason changing means 204c determines the priority of a transmission path switching reason on the basis of the failure information of the self apparatus or information transferred between the transmission apparatuses by using the K1 or K2 byte. Next, the switching reason changing means 204c compares this priority with the priority of the highest-priority switching reason stored in the storage section 205. Since transmission path switching reason determined when a failure occurs has priority lower than that of the highest-priority switching reason, the switching reason changing means 204c does not control the connection switch switching means 204b. Therefore, the connection switch is not switched.

Upon receiving the response signals 307 to 309, the monitor control apparatus WS1 sends, by the connection switch switching request means 209b, connection switch switching request signals 310 and 311 to the transmission apparatuses N2 and N3 which should switch the connection switches. In response to these signals, the transmission apparatuses N2 and N3 switch the connection switches by the connection switch switching means 204b and return response signals 312 and 313 representing normal completion of connection switch switching to the monitor control apparatus WS1.

Upon receiving the response signals 312 and 313, the monitor control apparatus WS1 generates a ring map at this time by the ring map update request means 209c and sends ring map update request signals 314 to 316 containing this ring map information to the transmission apparatuses N1 to N3, respectively. In response to these signals, the transmission apparatuses N1 to N3 update the ring map stored in the storage section 205 by the ring map update means 204d and return response signals 317 to 319 representing normal completion of update to the monitor control apparatus WS1.

Upon receiving the response signals 317 to 319, the monitor control apparatus WS1 causes the highest-priority switching reason cancel request means 209d to supply request signals 320 to 322 to the transmission apparatuses N1 to N3, respectively, to request the transmission apparatuses to cancel the "Lockout of Protection Span." In response to these signals, each of the transmission apparatuses N1 to N3 causes the transmission path switching reason changing means 204c to cancel the "Lockout of Protection Span" from the storage section 205.

When a failure occurs while the transmission path switching reason is switched to the highest-priority switching reason by the request from the monitor control apparatus WS1, each of the transmission apparatuses N1 to N3 switches, if necessary, the connection switch after the Lockout of Protection Span is erased from the storage section 205. The switching is effected on the basis of that one of the transmission path switching reasons stored in the storage section 205 which has the highest priority, new ring map, failure information, and the like. When this control is ended, the transmission apparatuses N1 to N3 return response signals 323 to 325 representing it to the monitor control apparatus WS1.

In the above process, information is transferred between the transmission apparatuses N1 to N3 and monitor control apparatus WS1 is done via a data communication channel (DCC) defined in the section overhead (SOH) of an STM signal.

As described above, in the first example, before switching of connection switches from the monitor control apparatus WS1, the highest-priority switching reason setting request signals 304 to 306 are sent from the monitor control apparatus WS1 to the transmission apparatuses N1 to N3 to set the highest-priority switching reason as the transmission path switching reason of the transmission apparatuses N1 to N3. Thus, even when a failure occurs during switching of the connection switches from the monitor control apparatus WS1, the transmission path switching reason is not changed by the transmission path switching reason changing means 204c. The connection switches are not switched due to the failure. In addition, after the ring map in all the transmission apparatuses N1 to N3 is updated, the transmission path switching reason with highest priority is canceled. For this reason, the connection switches are not switched when the transmission apparatuses N1 to N3 have different ring maps. Hence, connection error can be prevented in switching the connection switches from the monitor control apparatus.

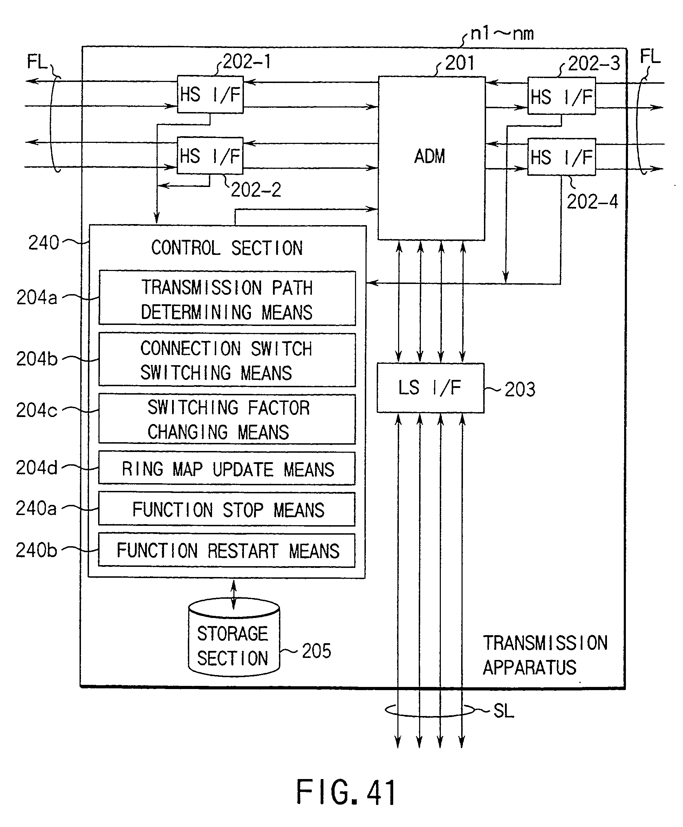

A second example of an information communication system useful for understanding the present invention will be described next with reference to FIGS. 41 to 43. The information communication system of this example also assumes the arrangements shown in FIGS. 36 and 39. However, the arrangements of a transmission apparatus and monitor control apparatus are different from those of the first example. For discrimination, the transmission apparatuses of the second example are represented by n1 to nm, and the monitor control apparatuses are represented by ws1 to wsm. The same reference numerals as in the first example denote the same parts in the second example.

FIG. 41 shows the arrangement of each of the transmission apparatuses n1 to nm of the second example. The transmission apparatuses n1 to nm have substantially the same arrangement as that of the transmission apparatuses N1 to Nm except the arrangement of the control section. The control section is represented by 240 for discrimination.

The control section 240 is realized by, e.g., a microcomputer and comprises a function stop means 240a and a function restart means 240b in addition to known communication and control means for information communication with another transmission apparatus N or monitor control apparatuses ws1 to wsm, a transmission path determining means 204a, a connection switch switching means 204b, a transmission path switching reason changing means 204c, and a ring map update means 204d.

The function stop means 240a stops the function of the transmission path determining means 204a in accordance with a request from one of the monitor control apparatuses ws1 to wsm. The function restart means 240b restarts the stopped function of the transmission path determining means 204a in accordance with a request from one of the monitor control apparatuses ws1 to wsm.

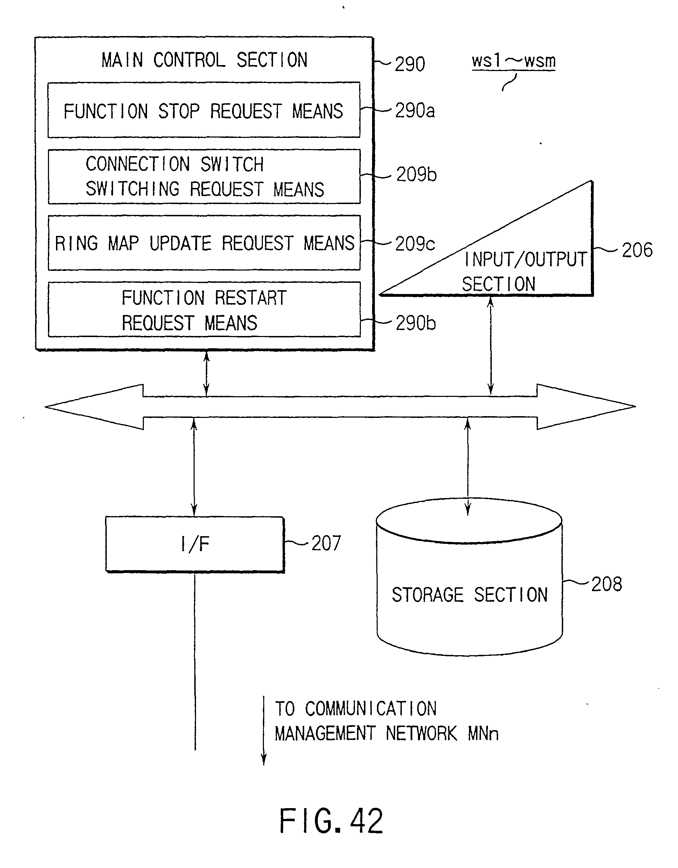

FIG. 42 shows the arrangement of each of the monitor control apparatuses ws1 to wsm according to the second example. The monitor control apparatuses ws1 to wsm have substantially the same arrangement as that of the monitor control apparatuses WS1 to WSm except the arrangement of the main control section.
For discrimination, the main control section is represented by 290.

The main control section 290 is realized by, e.g., a microcomputer and comprises, in addition to known communication and control means for information communication with the transmission apparatuses n1 to nm, a function stop request means 290a, a connection switch switching request means 209b, a ring map update request means 209c, and a function restart request means 290b.

The function stop request means 290a requests each of the transmission apparatuses n1 to nm to stop the function of the transmission path determining means 204a. The function restart request means 290b requests each of the transmission apparatuses n1 to nm to restart the function of the transmission path determining means 204a.

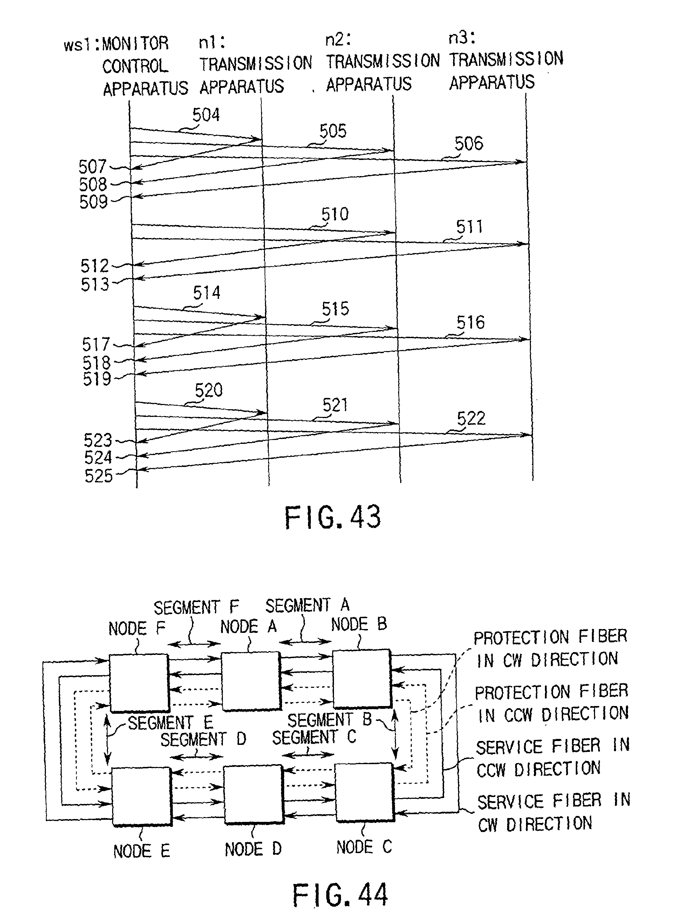

The communication path setting process in the information communication system having the above arrangement will be described next with reference to the message sequence chart shown in FIG. 43. Assume that various control operations associated with communication path setting are performed for three transmission apparatuses n1 to n3 by the monitor control apparatus ws1, and the transmission apparatuses n2 and n3 should actually set the communication path.

Referring to FIG. 43, when communication path setting operation is started, the monitor control apparatus ws1 sends function stop request signals 504 to 506 to the transmission apparatuses n1 to n3 by the function stop request means 290a. In response to these signals, the transmission apparatuses n1 to n3 stop the function of the transmission path determining means 204a by the function stop means 240a and return response signals 507 to 509 representing completion of stop to the monitor control apparatus ws1. The function stop request signals 504 to 506 are realized as, e.g., GET instructions or CREATE instructions of the CMIP protocol.

Upon receiving the response signals 507 to 509, the monitor control apparatus ws1 sends, by the connection switch switching request means 209b, connection switch switching request signals 510 and 511 to the transmission apparatuses n2 and n3 which should switch the connection switches. In response to these request signals, the transmission apparatuses n2 and n3 switch the connection switches by the connection switch switching means 204b and return response signals 512 and 513 representing normal completion of switching the connection switches to the monitor control apparatus ws1.

when a failure occurs while the transmission path determining means 204a is stopped by the request from the monitor control apparatus ws1, the switching reason changing means 204c determines the priority of a transmission path switching reason on the basis of the failure information of the self apparatus or information transferred between the transmission apparatuses by using the K1 or K2 byte. The switching reason changing means 204c then compares this priority with the priority of the switching reason stored in the storage section 205 which has the highest priority. The switching reason changing means 204c supplies that one of the transmission path switching reasons stored in the section 205 which has the highest priority, to the transmission path determining means 204a. Nonetheless, the connection switch switching means 204b is not controlled, and the connection switch is not switched. This is because the transmission path determining means 204a is stopped.

Upon receiving the response signals 512 and 513, the monitor control apparatus ws1 generates a ring map at this time by the ring map update request means 209c and sends ring map update request signals 514 to 516 containing this ring map information to the transmission apparatuses n1 to n3. In response to these request signals, the transmission apparatuses n1 to n3 update the ring map stored in the storage section 205 by the ring map update means 204d and return response signals 517 to 519 representing normal completion of update to the monitor control apparatus ws1.

Upon receiving the response signals 517 to 519, the monitor control apparatus ws1 sends function restart request signals 520 to 522 to the transmission apparatuses n1 to n3 by the function restart request means 290b. In response to these signals, the transmission apparatuses n1 to n3 restart the function of the transmission path determining means 204a by the function restart means 240b.

When a failure occurs while the function of the transmission path determining means 204a is stopped in accordance with the request from the monitor control apparatus ws1, each of the transmission apparatuses n1 to n3 switches, if necessary, the connection switch on the basis of the transmission path switching reason having the highest priority and stored in the storage section 205, stored, new ring map, failure information, and the like, after the function of the transmission path determining means 204a is restarted. When this control is ended, the transmission apparatuses n1 to n3 return response signals 523 to 525 representing it to the monitor control apparatus ws1.

In the above process, information is transferred between the transmission apparatuses n1 to n3 and monitor control apparatus ws1 is done via a data communication channel (DCC) defined in the section overhead (SOH) of an STM signal.

As described above, in the second example, before connection switch switching from the monitor control apparatus ws1, the function stop request signals 504 to 506 are sent from the monitor control apparatus ws1 to the transmission apparatuses n1 to n3 to stop the transmission path determining means 204a of the transmission apparatuses n1 to n3.

With this arrangement, even when a failure occurs during connection switch switching from the monitor control apparatus, the function of the transmission path determining means 204a is not driven, so the connection switches are not switched. In addition, the function of the transmission path determining means 204a is restarted after the ring map in all of the transmission apparatuses n1 to n3 is updated. For this reason, the connection switches are not switched when the transmission apparatuses n1 to n3 have different ring maps. Hence, connection error can be prevented in switching the connection switches from the monitor control apparatus.

The arrangements of the control sections 204 and 240 and main control sections 209 and 290 are not limited to the above examples as far as the function of the transmission path determining means 204a for switching connection switches can be stopped from the monitor control apparatus.

A third example of an information communication system useful for understanding the present invention will be described below in detail with reference to FIGS. 44 to 52.

FIG. 44 is a block diagram showing the arrangement of a ring network system to which a control method according to the third example is applied.

In this system, nodes A, B, C, D, E, and F are connected through four fibers comprising service traffic fibers in the CW (clockwise) direction and CCW (counterclockwise) direction and protection fibers in the CW and CCW (counterclockwise) direction and protection fibers in the CW and CCW directions, thereby connecting the nodes in a ring configuration. However, the nodes may be connected through two fibers such that traffics in the CW and CCW directions are flowed through one service traffic fiber and traffics in the CW and CCW directions are flowed through one protection fiber by transmission band separation or time-divisional communication.

Segments between the nodes A and B, between the nodes B and C, between the nodes C and D, between the nodes D and E, between the nodes E and F, and between the nodes F and A are called segments A, B, C, D, E, and F, respectively.

The service traffic fibers and protection fibers are formed as a high-speed line for transmitting time division multiplexed digital signals having a frame format standardized by the SDH, e.g., an STM-16 standardized by the SDH.

Each node is connected to a low-speed line (e.g., STM-1 standardized by the SDH) lower than the service traffic fiber or protection fiber as a high-speed line. The low-speed line is connected to, e.g., a exchange system (not shown).

For the ring network system having the above arrangement, in the normal state wherein transmission path switching by failure detection or an external command is not performed at all, transmission signals between the nodes are transmitted through the service traffic fibers. Each node always monitors the transmission state of both of the service traffic fibers and protection fibers. If a failure occurs in the service traffic transmission path of a certain segment, span switching is executed to continue communication by switching the transmission path in that segment from the service traffic fiber to the protection fiber. This forced span switching can be performed in accordance with an external command from a control apparatus (not shown) or the like.

On the other hand, failures occur in both the service traffic fiber and protection fiber in a certain segment, ring switching is executed to continue transmission by switching the transmission path to the protection fiber of another transmission path. The forced ring switching can also be performed in accordance with an external command from a control apparatus (not shown) or the like.

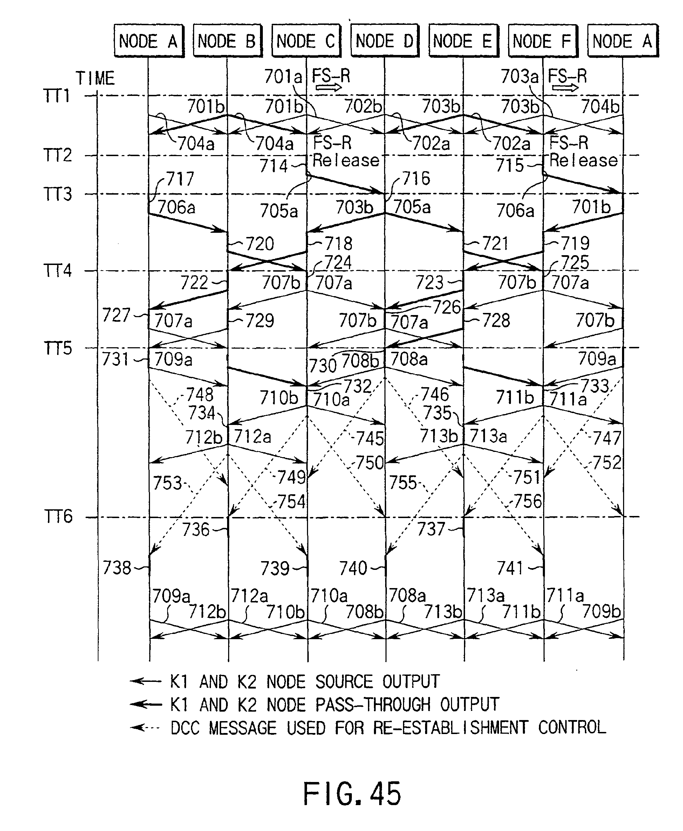

A control method useful for understanding the present invention in the ring network system with the above arrangement will be described below with reference to FIGS. 45 to 52.

FIG. 45 shows a sequence, in the ring network system having the above arrangement, after "Forced Switch Ring" (FS-R) switching is performed in two segments, i.e., the segments C and F until the FS-R transmission path switching reasons of the two segments are simultaneously recovered, and the network is controlled to the normal state by the control method of the present invention.

In FIG. 45, a control signal representing the contents of a request output for ring switching, which is transferred between the nodes, is realized by a K-byte request signal (ITU-T recommendation G.841) set in the section overhead (SOH) of an SDH frame. The K-byte request signal contains an 8-bit K1 byte and 8-bit K2 byte and is sent from a request source to a request destination.

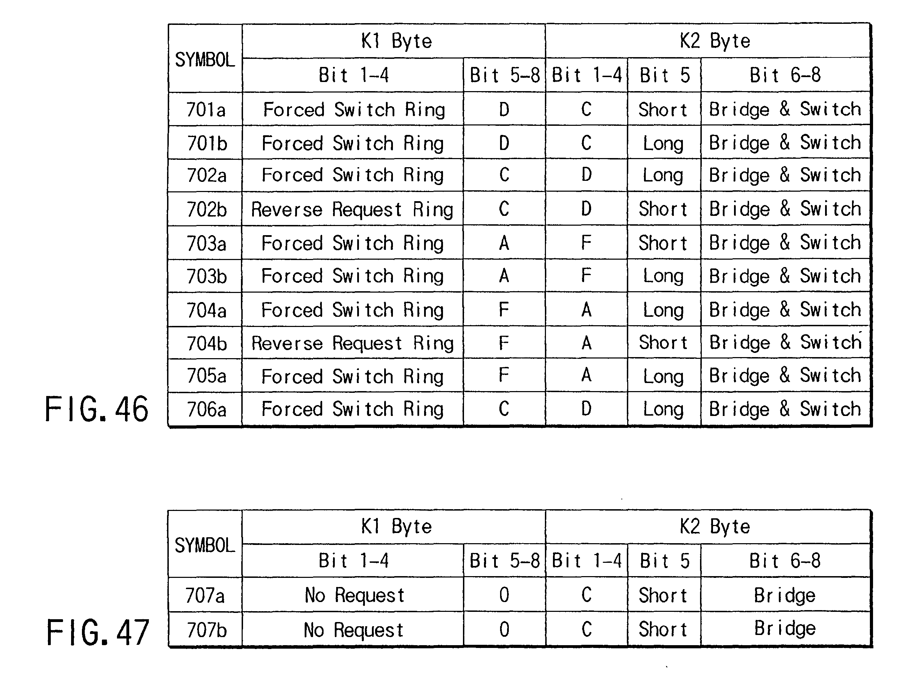

In the K-byte request signal, the first to fourth bits of the K1 byte represent a transmission path switching reason to be sent to another node, and the fifth to eighth bits represent the request destination, as shown in FIGS. 46 to 48. In the K2 byte, the first to fourth bits represent the request source, the fifth bit represents the direction to the switching segment (failure segment), and the sixth to eighth bits represent the state of the connection switch of the request source node.

Transmission path switching reasons to be sent to another node include a "Forced Switch Ring" representing forced ring switching, "Reverse Request Ring" representing a response to a ring switching request, and "No Request" representing the absence of a request. Directions to the switching segment include "Short" direction representing a transmission direction through the switching segment, and "Long" direction representing a transmission direction through segments other than the switching segment. Connection switch states of a request source include "Bridge" control representing a state wherein a traffic from the low-speed line side is connected to both the service traffic fiber and protection fiber on the high-speed line side, "Switch" control representing a state wherein a traffic to the low-speed line side is switched from the service traffic fiber on the high-speed side to the protection fiber on the high-speed side, and "Idle" representing a state wherein neither "Bridge" control nor "Switch" control is performed.

Referring to FIGS. 46 to 48, as an example of transmission actually using a K byte, "No Request" is transmitted using "0000", "Short" is transmitted using "1", "Long" is transmitted using "0", "Bridge & Switch" is transmitted using "010", "Bridge" is transmitted using "001", and "Idle" is transmitted using "000".

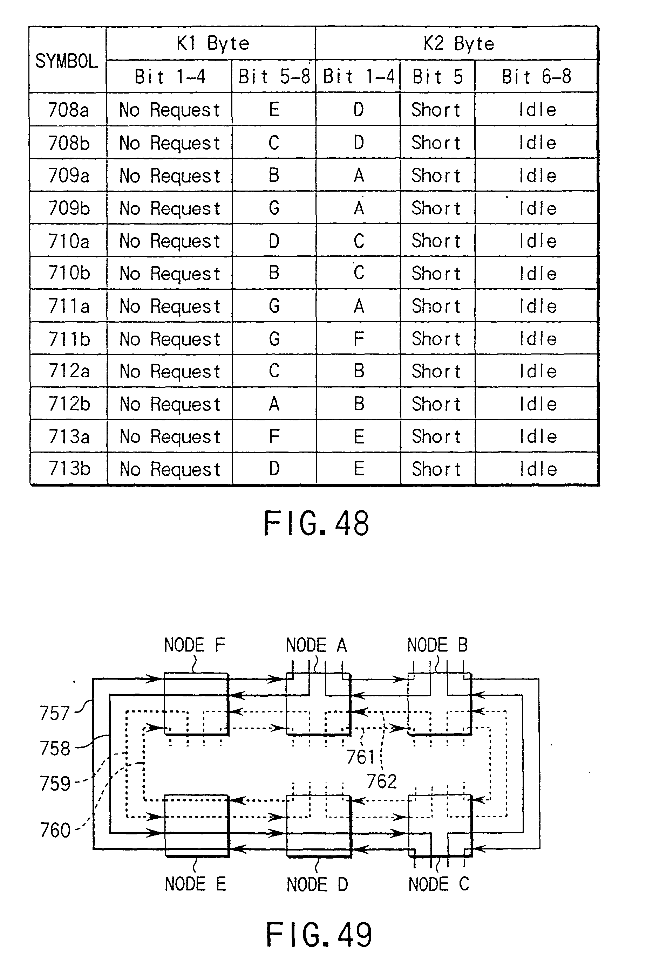

FIG. 49 shows an example of the normal control state of the network on the basis of the network arrangement shown in FIG. 44. In FIGS. 49 to 52, a service traffic fiber is indicated by a solid line, and a protection fiber is indicated by a broken line. In addition, a transmission path through which a service traffic flows is indicated by a bold solid line, and a transmission path through which a part-time traffic flows is indicated by a bold broken line. Communication is performed by establishing communication paths between the nodes in response to a communication request from the low-speed line.

In FIG. 49, a description will be made assuming that communication paths for bi-directional service traffics 757 and 758 are established between the nodes A and C, communication paths for bi-directional part-time traffics 759 and 760 are established between the nodes D and F, and communication paths for bi-directional part-time traffics 761 and 762 are established between the nodes A and B.

More specifically, to establish the communication path for the service traffic 757, the node C performs switching control to add all or part of signals input from the low-speed line side to a time slot of a multiplexed signal transmitted from the node B. In addition, switching control is performed to drop at the node A the time-slot signals multiplexed in the node C. With this control, a communication path through which signals input from the low-speed line side of the node C are transmitted to the node A through the nodes D, E, and F is established as the service traffic 757. The service traffic 758 in the reverse direction is also established as a communication path multiplexed from the low-speed line to the high-speed line at the node A and demultiplexed from the high-speed line to the low-speed line at the node C by switching control for the nodes A and C.

In the actual operation form, a plurality of communication paths including communication paths for service traffics and communication paths for part-time traffics are simultaneously established between various nodes. Upon receiving a request signal associated with span switching and ring switching, each node determines the communication path establish condition at that time and switches only communication paths that require switching.

For the sake of simplicity, assume that the network shown in FIG. 49 is set in the normal control state wherein span switching or ring switching is not performed at all before occurrence of a failure, and failures that require ring switching occur in the segments C and F. When a failure that requires ring switching occurs in segments C and F at TT1 of FIG. 45, the nodes C and D detect that the failure that requires ring switching occurs in the segment C and perform ring switching of the segment C. The nodes A and F also detect that a failure that requires ring switching occurs the segment F and perform ring switching of the segment F.

For ring switching of the segment C, the node C transmits, to the node D in the Short direction (direction of the segment C), a K-byte request signal (701a in FIG. 45; to be referred to as "a request signal (ring switching: C → D, Short, Bridge & Switch) hereinafter, and this also applies to other signals) containing a forced ring switching request, which represents that the request source node C requests the request destination node D to perform Bridge & Switch control. The node C also transmits, to the node D in the Long direction (direction of the segment B), a K-byte request signal (ring switching: C → D, Long, Bridge & Switch, 701b in FIG. 45) containing a forced ring switching request, which represents that the request source node C requests the request destination node D to perform Bridge & Switch control. On the other hand, the opposing node D transmits a Reverse Request Ring (ring switching: D → C, Short, Bridge & Switch, 702b in FIG. 45) and a request signal (ring switching: D → C, Long, Bridge & Switch, 702a in FIG. 45).

Similarly, for ring switching of the segment F, the node F transmits a request signal (ring switching: F → A, Short, Bridge & Switch, 703a in FIG. 45) and a request signal (ring switching: F → A, Long, Bridge & Switch, 703b in FIG. 45). The node A transmits a Reverse Request Ring (ring switching: A → F, Short, Bridge & Switch, 704b in FIG. 45) and a request signal (ring switching: A → F, Long, Bridge & Switch, 704a in FIG. 45).

The nodes B and E as intermediate nodes pass through the received request signals in the "Long" direction (ring switching: Long, Bridge & Switch, 701b, 704a, 702a, and 703b in FIG. 45) to adjacent nodes.

The switching nodes C and D receive the request signals in the "Long" direction (ring switching: Long, Bridge & Switch, 704a and 703b in FIG. 45) which are associated with ring switching of the segment F. Since the switching nodes C and D have also received the request signals in the "Short" direction (ring switching: Short, Bridge & Switch, 702b and 701a in FIG. 45) before receiving the request signals in the "Long" direction, the nodes C and D do not pass through the request signals in the "Long" direction (ring switching: Long, Bridge & Switch, 704a and 703b in FIG. 45). Similarly, the switching nodes A and F receive the request signals in the "Long" direction (ring switching: Long, Bridge & Switch, 702a and 701b in FIG. 45) which are associated with ring switching of the segment C but do not pass through the signals.

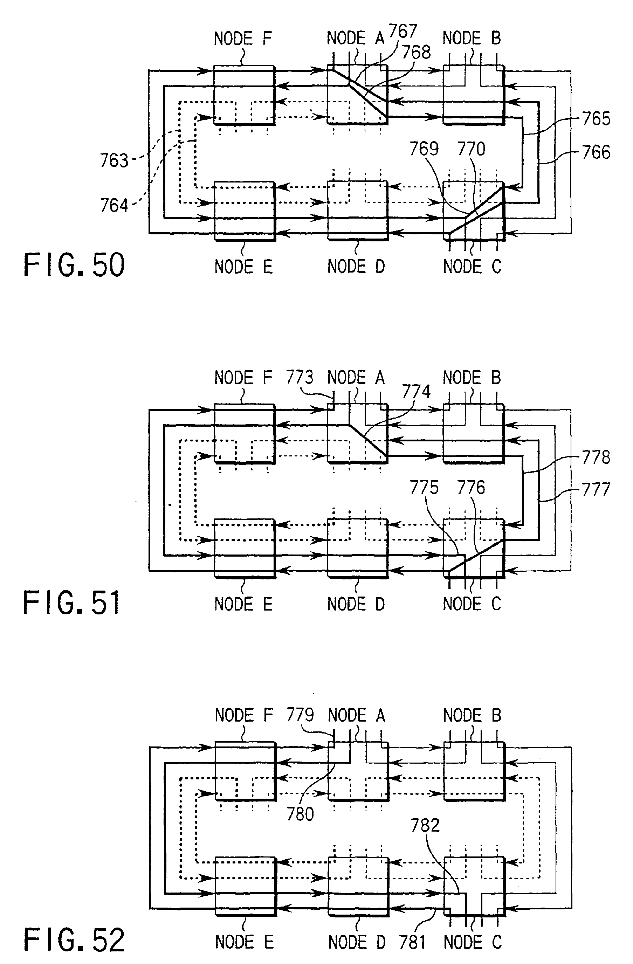

As a result, as network control, ring switching control for two segments are executed. FIG. 50 shows the network control state at this time. As the control result, the service traffics 757 and 758 shown in FIG. 49 are restored to service traffics 765 and 766 in FIG. 50 by switching the service traffic fibers to the protection fibers. The part-time traffics 759 and 760 shown in FIG. 49 become part-time traffics 763 and 764 in FIG. 50 by re-establishment control for restoring temporarily interrupted traffics. The part-time traffics 761 and 762 shown in FIG. 49 are interrupted to transmit the service traffics 765 and 766.

Assume that in the control state shown in FIG. 50, the failures in the switching nodes C and D are simultaneously recovered at time TT2 in FIG. 45.

Upon detecting that the failure in the segment C is recovered, the node C execute maintenance control 714 for maintaining the node control state, passes through the request signal for ring switching of the segment F (ring switching: A → F, Long, Bridge & Switch, 704a in FIG. 45) which has not been passed through, to the next node D (705a in FIG. 45). Similarly, the node F detects that the failure in the segment F is recovered, executes maintenance control 715 for maintaining the node control state, passes through the request signal for ring switching of the segment C (ring switching: D → C, Long, Bridge & Switch, 702a in FIG. 45) which has not been passed through, to the next node D (706a in FIG. 45). At this time, the network control state is identical to the control state shown in FIG. 50.

At time TT3 in FIG. 45, upon receiving the request signal (ring switching: A → F, Long, Bridge & Switch, 705a in FIG. 46) associated with ring switching of the segment F from the node C, the node D recognizes that the switching request for the segment C is canceled, and executes ring bridge & switch control 716 necessary for ring switching of the segment F. Actually, in the communication path establish state in FIG. 50, since no path requires switching at the node D, switching operation for connection switch is not performed. The node D passes through the request signal (ring switching: A → F, Long, Bridge & Switch, 705a in FIG. 46) to the node E, and also passes through the request signal (ring switching: F → A, Long, Bridge & Switch, 703b in FIG. 46) associated with ring switching of the segment F, which has been received from the opposite direction and has not been passed through, to the node C.

Upon receiving the request signal (ring switching: F → A, Long, Bridge & Switch, 703b in FIG. 46) from the node D, the node C confirms that recovery of the transmission path switching reason of the segment C has been recognized by the opposing node D, and executes ring bridge & switch control 718 for ring switching of the segment F. In fact, in the communication path establish state in FIG. 50, bridge control 770 and switch control 769 do not change. The node C passes through the request signal (ring switching: F → A, Long, Bridge & Switch, 703b in FIG. 45) to the node B.

On the other hand, upon receiving the request signal (ring switching: A → F, Long, Bridge & Switch, 705a in FIG. 46) from the node D, the intermediate node E executes ring bridge & switch control 721 for ring switching of the segment F and passes through the received request signal (ring switching: A → F, Long, Bridge & Switch, 705a in FIG. 46) to the node F. Actually, in the communication path establish state in FIG. 50, since no path requires switching for connection switch, switching operation by ring bridge & switch control 721 is not performed.

At time TT3, the node A receives the request signal (ring switching: D → C, Long, Bridge & Switch, 706a in FIG. 45) from the node F and detects that the transmission path switching reason of the segment F is recovered. In response to this detection, the node A executes ring bridge & switch control 717 for ring switching of the segment C. In the communication path establish state in FIG. 50, bridge control 768 and switch control 767 do not change. The node A transfers the request signal (ring switching: D → C, Long, Bridge & Switch, 706a in FIG. 45) to the node B and also transmits the request signal (ring switching: C → D, Long, Bridge & Switch, 701b in FIG. 46) which has not been passed through, to the node F.

Upon receiving the request signal from the node A (701b in FIG. 46), the node F can confirm that the counterpart node A has recognized recovery of the transmission path switching reason of the segment F. The node F executes ring bridge & ring switch control 719 based on the ring switching request for the segment C, and passes through the request signal (ring switching: C → D, Long, Bridge & Switch, 701b in FIG. 46) to the node E. Actually, in the communication path establish state in FIG. 50, since no path requires switching for connection switch, switching operation by ring bridge & ring switch control 719 is not performed.

Similarly, the intermediate node B receives the request signal (ring switching: D → C, Long, Bridge & Switch, 706a in FIG. 45) from the node A, executes ring bridge & switch control 720, and passes through the received request signal (706a in FIG. 45) to the node C. In fact, in the communication path establish state in FIG. 50, since no path requires switching for connection switch, switching operation by ring bridge & switch control 720 is not performed. Hence, the network control state is identical to the control state shown in FIG. 50.

At time TT4 in FIG. 45, the nodes B and E execute ring bridge & switch control 722 and 723 and pass through the received request signals (ring switching: Bridge & Switch) to the nodes A and D, respectively.

Although ring switching control for the segment C has been performed, and ring switching of the segment C is canceled, the node C newly receives a request signal (ring switching: D → C, Long, Bridge & Switch, 706a in FIG. 45) for requesting ring switching associated with the segment C, which is addressed to the self node, from the CW direction. The node C determines that a simultaneous recovery event for the ring switching reasons of a plurality of segments (segment F and segment C) has occurred. At this time, similar to node C, the node F also determines that a simultaneous recovery event has occurred for the ring switching reasons of the segments F and C.

For this reason, the nodes C and F recognize the necessity of control for transiting the self nodes to the idle state, i.e., initial state before occurrence of failures and the network to the normal state, i.e., initial state before occurrence of failures. As a result, first, in order to set all nodes on the network in the drop switch state (only switch control of the switch control and bridge control is recovered), the nodes C and F execute drop switch control 724 and 725 for the self nodes to set the self nodes in the ring bridge control state and transmit request signals (No Request: Bridge) whose transmission source and request destination are not specified to nodes in the CW direction (707a in FIG. 47) and CCW direction (707b in FIG. 47). Hence, traffics received from the high-speed line through the protection fiber are received from the high-speed line through the service traffic fiber.

In a request signal whose transmission source and request destination are not specified, the fifth to eighth bits of the K1 byte and the first to fourth bits of the K2 byte, which represent the transmission source and destination, is "0," for example.

The nodes A, B, D, and E which receive the request signals (No Request: Bridge, 707a in FIG. 47 or 707b in FIG. 47) whose transmission source and request destination are not specified execute drop switch control 727, 729, 726, and 728, respectively, to change the node control state to ring bridge state. The nodes E and B further pass through the received request signals (No Request: Bridge).

FIG. 51 shows the network control state at this time. Referring to FIG. 51, in the nodes A and C, drop switch control states 773 and 775 and bridge control states 774 and 776 are set, respectively. Hence, traffics from the high-speed line are received from the service traffic fiber, and traffics from the low-speed line are transmitted to both the service traffic fiber and protection fiber. Reference numerals 777 and 778 denote the bi-directional flows of service traffics.

At time TT5 in FIG. 45, the nodes A and D receive the request signals (No Request: Bridge, 707b and 707a in FIG. 47) from both the CW and CCW directions. For this reason, they can determine that drop switch control for all nodes (nodes A, B, C, D, E, and F) on the network is ended, and all nodes are set in the bridge control state at this time. The nodes A and D execute drop bridge control 730 and 731 for the self nodes to change the state of the self nodes from the bridge state to idle state before occurrence of failures. The nodes A and D transmit request signals (No Request: Idle) representing that they are not performing bridge and switch control in the CW (709a and 708a in FIG. 45) and CCW (709b and 708b in FIG. 48) directions.

Next, the nodes C and F receive the request signals (No Request: Idle, 708b and 709b in FIG. 48) from the CCW direction and also receive the request signals (No Request: Idle, 707b and 707a in FIG. 47) which are passed through by the node B or E. Since the K-byte request signals 707a and 707b can be received from both directions of the nodes, the nodes F and C determine that drop switch control is ended, and the bridge control state is set at all nodes (nodes A, B, C, D, E and F) comprising the network. The nodes C and F execute drop bridge control 732 and 733 for the self nodes. The node F transmits request signals (No Request: Idle) in the CW direction (711a in FIG. 48) and CCW direction (711b in FIG. 48). The node C transmits request signals (No Request: Idle) in the CW direction (710a in FIG. 48) and CCW direction (710b in FIG. 48).

FIG. 52 shows a state wherein drop switch control 779 and drop bridge control 780 for the node A are ended, and drop bridge control 781 and drop switch control 782 for the node C are ended.

The nodes E and B receive, from the adjacent nodes, the request signals (No Request: Idle) 711b and 710b addressed to the self nodes, respectively, and execute drop bridge control 735 and 734 for the self nodes. The node E transmits request signals (No Request: Idle) in the CW direction (713a in FIG. 45) and CCW direction (713b in FIG. 45). The node B transmits request signals (No Request: Idle) in the CW direction (712a in FIG. 45) and CCW direction (712b in FIG. 45).

At this time, in all nodes, the service traffic communication paths are set in the idle state before occurrence of failures, though the part-time traffics are kept interrupted. At this time, these nodes can perform processing based on another transmission path switching reason or re-processing based on a pending transmission path switching reason. Next, part-time traffic re-establishment control is started.

In order to re-establish the part-time traffics (761 and 762 in FIG. 49) interrupted for restoration control of service traffic, nodes which have ended drop bridge control and drop switch control for service traffics, as shown in FIG. 52, transmit information representing the re-establishable state to adjacent nodes using Data Communication Channel (DCC) message signals.

As shown in FIG. 45, the node D transmits DCC message signals 745 and 746, the node A transmits DCC message signals 747 and 748, the node C transmits DCC message signals 749 and 750, the node F transmits DCC message signals 751 and 752, the node B transmits DCC message signals 753 and 754, and the node E transmits DCC message signals 755 and 756.

At time TT6 in FIG. 45, part-time traffics are re-established. A description will be made while exemplifying the node D. When the node D receives both the DCC message signals 750 and 755 transmitted from the nodes C and E to the self node, to which the node D has transmitted the DCC message signals 745 and 746, the node D executes re-establishment control 740 for part-time traffics on both sides of the self node and is set in the initial control state before occurrence of failures. In a similar manner, when part-time traffic re-establishment control 737, 741, 738, 736, and 739 for the nodes E, F, A, B, and C are ended, the network is set in the normal state shown in FIG. 49.

In the sequence shown in FIG. 45, after the DCC message signals 750 and 755 are received from the both sides, the node D executes re-establishment of part-time traffics on both sides. However, the present invention is not limited to this. The part-time traffics may be re-established in units of segments sequentially from a segment from which the DCC message signal is received.

Hence, according to the above control method, even when the entire network is in the pass-through control state because of a simultaneous recovery event, and protection switching cannot be executed although no transmission path switching reason is present, the network state can be quickly controlled to the stable normal state without any adverse affect on service traffics and any connection error of traffics by newly using the above method.

## Claims

1. A part-time traffic connection control method for a ring network system which has a plurality of transmission apparatuses (1, ..., 6) and transmission paths (L) multiplexed by working channels (11) and protection channels (12) and connecting the plurality of transmission apparatuses in a ring configuration to form a ring network, each of the plurality of transmission apparatuses (1, ..., 6) having a function of switching the working channels/protection channels of the transmission paths (L) when a failure occurs in the ring network, comprising:
the first step (S4, S9; S104, S109; S204, S209; S309) of, when the working channels/protection channels of the transmission paths (L) must be switched, sending part-time traffic connection requests (61) from adjacent transmission apparatuses (2, 3) on both sides of a segment where a transmission path switching reason (31) is present to opposing ones of the adjacent transmission apparatuses (2, 3) after switching of the working channels/ protection channels of the transmission paths is ended;
the second step (S5, S10; S105, S110; S205, 210; S310) of receiving, by the adjacent transmission apparatuses (2, 3), the part-time traffic connection request (61) sent from the opposing ones (2, 3) of the adjacent transmission apparatuses; and
the third step (S6, S11; S106, S111; S206, S211; S311) of, after completion of the second step, executing part-time traffic reconnection between the adjacent transmission apparatuses (2, 3).

2. A method according to claim 1, **characterized in that**
the transmission path switching reason is occurrence (S1; S101; S201) of a failure.

3. A method according to claim 1, **characterized in that**
the transmission path switching reason is transmission path switch back (S7; S107; S207; S307) following to recovery of failure.

4. A method according to claim 1, **characterized in that**
the transmission path switching (S307) factor is transmission path switching for a held failure following to recovery of high-priority failure of multiple failures.

5. A method according to claim 1, **characterized in that**
the part-time traffic connection request contains information representing a type of transmission path switching,
information representing a transmission apparatus as a transmission destination of the part-time traffic connection request,
information representing a transmission apparatus as a transmission source of the part-time traffic connection request, and
information representing a direction in which the part-time traffic connection request is transmitted.

6. A method according to claim 5, **characterized in that**
the part-time traffic connection request is transmitted through a Data Communication Channel (DCC) defined by the ITU-T recommendation G.709.

7. A part-time traffic connection control method for a ring network system which has a plurality of transmission apparatuses (1, ..., 6) and a transmission path multiplexed by working channels (11) and protection channels (12) and connecting the plurality of transmission apparatuses (1, ..., 6) in a ring configuration to form a ring network, each of the working channel and protection channel transmission paths having bi-directional transmission paths in clockwise and counterclockwise directions, and each of the plurality of transmission apparatuses having a function of switching the working channels/protection channels of the transmission paths when a failure occurs in the ring network, comprising:
the first step (S4, S9; S104, S109; S204, S209; S309) of, when the working channels/protection channels of the transmission paths must be switched, sending a part-time traffic connection request (61) from each transmission apparatus serving as a switching node taking the initiative for transmission path switching through the transmission path in the opposite direction of a segment where a transmission path switching reason is present, after switching of the working channel/ protection channel of the transmission path is ended;
the second step (S5, S10; S105, S110; S205, S210; S309) of receiving, by each transmission apparatus other than the switching node, the part-time traffic connection requests that arrive through the transmission path from both directions;
the third step (S5, S10; S105, S110; S206, S210; S310) of receiving, by each transmission apparatus as the switching node, the part-time traffic connection request that arrives through the transmission path; and
the fourth step (S6, S11; S106, S111; S206, S211; S311) of executing part-time traffic reconnection by each transmission apparatus other than the switching nodes after completion of the second step and by each transmission apparatus as the switching node after completion of the third step.

8. A method according to claim 7, **characterized in that**
the transmission path switching reason is occurrence (S1; S101; S201) of a failure.

9. A method according to claim 7, **characterized in that** the transmission path switching reason is transmission path switch back (S7; S107; S307) following to recovery of failure.

10. A method according to claim 7, **characterized in that**
the transmission path switching reason is transmission path switching (S307) for a held failure following to recovery of high-priority failure of multiple failures.

11. A method according to claim 7, **characterized in that**
the part-time traffic connection request contains information representing a type of transmission path switching,
information representing a transmission apparatus as a transmission destination of the part-time traffic connection request,
information representing a transmission apparatus as a transmission source of the part-time traffic connection request, and
information representing a direction in which the part-time traffic connection request is transmitted.

12. A method according to claim 11, **characterized in that**
the part-time traffic connection request is transmitted through a DCC defined by the ITU-T recommendation G.709.

13. A transmission apparatus used in a ring network system which has a plurality of transmission apparatuses and a transmission path multiplexed by working channels and protection channels and connecting said plurality of transmission apparatuses in a ring configuration to form a ring network, comprising:
transmission signal restoration control means (106a) for, when a failure occurs in the ring network, switching the working channel/protection channel of the transmission path to restore a transmission signal;
transmission means (106b) for, when the working channels/protection channels of the transmission paths must be switched, sending a part-time traffic connection request to a transmission apparatus opposing via a segment where a transmission path switching reason is present after switching of the working channel/protection channel of the transmission path is ended;
reception means (106b) for receiving the part-time traffic connection request sent from said transmission apparatus opposing via the segment where the transmission path switching reason is present to the self apparatus; and
reconnection means (106c) for, after the part-time traffic connection request is received by said reception means, executing part-time traffic reconnection to said transmission apparatus opposing via the segment where the transmission path switching reason is present.

14. A transmission apparatus according to claim 13, **characterized in that**
the transmission path switching reason is occurrence (S1; S101; S201) of a failure.

15. A transmission apparatus according to claim 13, **characterized in that**
the transmission path switching reason is transmission path switch back (S7; S107; S207; S307) following to recovery of failure.

16. A transmission apparatus according to claim 13, **characterized in that**
the transmission path switching reason is transmission path switching (S307) for a held failure following to recovery of high-priority failure of multiple failures.

17. A transmission apparatus according to claim 13, **characterized in that**
the part-time traffic connection request contains information representing a type of transmission path switching,
information representing a transmission apparatus as a transmission destination of the part-time traffic connection request,
information representing a transmission apparatus as a transmission source of the part-time traffic connection request, and
information representing a direction in which the part-time traffic connection request is transmitted.

18. A transmission apparatus according to claim 17, **characterized in that**
said transmission apparatus comprises a Synchronous Digital Hierarchy (SDH) transmission apparatus, and
said transmission means transmits the part-time traffic connection request through a DCC defined by the ITU-T recommendation G.709.

19. A transmission apparatus used in a ring network system which has a plurality of transmission apparatuses and a transmission path multiplexed by working channels and protection channels and connecting the plurality of transmission apparatuses in a ring configuration to form a ring network, each of the working channel and protection channel transmission paths having bi-directional transmission paths in clockwise and counterclockwise directions, comprising:
transmission signal restoration control means (106a) for, when a failure occurs in the ring network, switching the working channel/protection channel of the transmission path to restore a transmission signal;
transmission means (106b) for, when the working channels/protection channels of the transmission paths must be switched, and the self apparatus is a transmission apparatus which takes the initiative for transmission path switching, sending a part-time traffic connection request through the transmission path in the opposite direction of a segment where a transmission path switching reason is present, after switching of the working channel/protection channel of the transmission path is ended;
reception means (106b) for receiving the part-time traffic connection request; and
reconnection means (106b, 106c) for, when the working channels/protection channels of the transmission paths must be switched, if the self apparatus is a transmission apparatus other than a transmission apparatus taking the initiative for transmission path switching, receiving the part-time traffic connection requests that arrive from both directions through the transmission path and then executing part-time traffic reconnection, and if the self apparatus is a transmission apparatus which takes the initiative for transmission path switching, receiving the part-time traffic connection request that arrives through the transmission path and then executing part-time traffic reconnection.

20. A transmission apparatus according to claim 19, **characterized in that**
the transmission path switching reason is occurrence (S1; S101; S201) of a failure.

21. A transmission apparatus according to claim 19, **characterized in that**
the transmission path switching reason is transmission path switch back (S7; S107; S207; S307) following to recovery of failure.

22. A transmission apparatus according to claim 19, **characterized in that**
the transmission path switching reason is transmission path switching (S307) for a held failure following to recovery of high-priority failure of multiple failures.

23. A transmission apparatus according to claim 19, **characterized in that**
the part-time traffic connection request contains information representing a type of transmission path switching,
information representing a transmission apparatus as a transmission destination of the part-time traffic connection request,
information representing a transmission apparatus as a transmission source of the part-time traffic connection request, and
information representing a direction in which the part-time traffic connection request is transmitted.

24. A transmission apparatus according to claim 23, **characterized in that**
said transmission apparatus comprises a Synchronous Digital Hierarchy (SDH) transmission apparatus, and
said transmission means transmits the part-time traffic connection request through a DCC defined by the ITU-T recommendation G.709.

## Patentansprüche

1. Ein Gelegenheits- (part-time) Verkehrsverbindungssteuerverfahren für ein Ringnetzsystem, das eine Vielzahl von Übertragungsvorrichtungen (1, ..., 6) und Übertragungswegen (L) hat, die multiplext sind nach Arbeitskanälen (11) und Schutzkanälen (12) und die Vielzahl von Übertragungsvorrichtungen in einer Ringkonfiguration verbinden, um ein Ringnetz zu bilden, wobei jede der Vielzahl von Übertragungsvorrichtungen (1, ..., 6) eine Funktion zum Umschalten der Arbeitskanäle/Schutzkanäle der Übertragungswege (L) hat, wenn ein Fehler in dem Ringnetz auftritt, umfassend:
den ersten Schritt (S4, S9; S104, S109; S204, S209; S309) zum Senden, wenn die Arbeitskanäle/Schutzkanäle der Übertragungswege (L) umgeschaltet werden müssen, von Gelegenheitsverkehrsverbindungsanforderungen (61) von benachbarten Kommunikationsvorrichtungen (2, 3) auf beiden Seiten eines Segmentes, wo ein Übertragungswegumschaltungsgrund (31) vorhanden ist, zu entgegenliegenden der benachbarten Kommunikationsvorrichtungen (2, 3), nachdem Umschaltung der Arbeitskanäle/Schutzkanäle der Übertragungswege beendet ist;
den zweiten Schritt (S5, S10; S105, S110; S205, S210; S310) zum Empfangen, durch die benachbarten Kommunikationsvorrichtungen (2, 3), der Gelegenheitsverkehrsverbindungsanforderung (61), die von den entgegenliegenden (2, 3) der benachbarten Übertragungsvorrichtungen gesendet wird; und
den dritten Schritt (S6, S11; S106, S111; S206, S211; S311) zum Ausführen, nach Abschluss des zweiten Schrittes, der Gelegenheitsverkehrsneuverbindung zwischen den benachbarten Übertragungsvorrichtungen (2, 3).

2. Ein Verfahren nach Anspruch 1, **gekennzeichnet dadurch, dass**
der Übertragungswegumschaltungsgrund Auftreten (S1; S101; S201) eines Fehlers ist.

3. Ein Verfahren nach Anspruch 1, **gekennzeichnet dadurch, dass**
der Übertragungswegumschaltungsgrund Übertragungswegzurückschalten (S7; S107; S207; S307) folgend Erholung von einem Fehler ist.

4. Ein Verfahren nach Anspruch 1, **gekennzeichnet dadurch, dass**
der Übertragungswegumschaltungs- (S307) Faktor Übertragungswegumschaltung für einen gehaltenen Fehler folgend Erholung von einem Fehler hoher Priorität von vielen Fehlern ist.

5. Ein Verfahren nach Anspruch 1, **gekennzeichnet dadurch, dass**
die Gelegenheitsverkehrsverbindungsanforderung enthält Information, die einen Typ von Übertragungswegumschaltung darstellt,
Information, die eine Übertragungsvorrichtung darstellt als ein Übertragungsziel der Gelegenheitsverkehrsverbindungsanforderung,
Information, die eine Übertragungsvorrichtung darstellt als eine Übertragungsquelle der Gelegenheitsverkehrsverbindungsanforderung, und
Information, die eine Richtung darstellt, in der die Gelegenheitsverkehrsverbindungsanforderung übertragen wird.

6. Ein Verfahren nach Anspruch 5, **gekennzeichnet dadurch, dass**
die Gelegenheitsverkehrsverbindungsanforderung durch einen Datenkommunikationskanal (DCC) übertragen wird, der durch die ITU-T-Empfehlung G.709 definiert ist.

7. Ein Gelegenheitsverkehrsverbindungssteuerverfahren für ein Ringnetzsystem, das eine Vielzahl von Übertragungsvorrichtungen (1, ..., 6) und einen Übertragungsweg hat, multiplext ist durch Arbeitskanäle (11) und Schutzkanäle (12), und die Vielzahl von Übertragungsvorrichtungen (1, ..., 6) in einer Ringkonfiguration verbindet, um ein Ringnetz zu bilden, wobei jeder der Arbeitskanal- und Schutzkanal-Übertragungswege bidirektionale Übertragungswege in Richtungen mit und entgegen dem Uhrzeigersinn hat, und jede der Vielzahl von Übertragungsvorrichtungen eine Funktion zum Umschalten der Arbeitskanäle/Schutzkanäle der Übertragungswege hat, wenn ein Fehler in dem Ringnetz auftritt, umfassend:
den ersten Schritt (S4, S9; S104, S109; S204, S209; S309) zum Senden, wenn die Arbeitskanäle/Schutzkanäle der Übertragungswege umgeschaltet werden müssen, einer Gelegenheitsverkehrsverbindungsanforderung (61) von jeder Übertragungsvorrichtung, die als ein Schaltknoten dient, der die Initiative für eine Übertragungswegumschaltung durch den Übertragungsweg in der entgegengesetzten Richtung eines Segmentes übernimmt, wo ein Übertragungswegumschaltungsgrund vorhanden ist, nachdem Umschaltung des Arbeitskanals/Schutzkanals des Übertragungswegs beendet ist;
den zweiten Schritt (S5, S10; S105, S110; S205, S210; S309) zum Empfangen, durch jede Übertragungsvorrichtung außer dem Schaltknoten, der Gelegenheitsverkehrsverbindungsanforderungen, die durch den Übertragungsweg von beiden Richtungen ankommen;
den dritten Schritt (S5, S10; S105, S110; S206, S210; S310) zum Empfangen, durch jede Übertragungsvorrichtung als der Schaltknoten, der Gelegenheitsverkehrsverbindungsanforderung, die durch den Übertragungsweg ankommt; und
den vierten Schritt (S6, S11; S106, S111; S206, S211; S311) zum Ausführen einer Gelegenheitsverkehrsneuverbindung durch jede Übertragungsvorrichtung außer den Schaltknoten nach Abschluss des zweiten Schrittes und durch jede Übertragungsvorrichtung als der Schaltknoten nach Abschluss des dritten Schrittes.

8. Ein Verfahren nach Anspruch 7, **gekennzeichnet dadurch, dass**
der Übertragungswegumschaltungsgrund Auftreten (S1; S101; S201) eines Fehlers ist.

9. Ein Verfahren nach Anspruch 7, **gekennzeichnet dadurch, dass**
der Übertragungswegumschaltungsgrund Übertragungswegzurückschalten (S7; S107; S307) folgend Erholung von einem Fehler ist.

10. Ein Verfahren nach Anspruch 7, **gekennzeichnet dadurch, dass**
der Übertragungswegumschaltungsgrund Übertragungswegumschaltung (S307) für einen gehaltenen Fehler folgend Erholung von einem Fehler hoher Priorität von vielen Fehlern ist.

11. Ein Verfahren nach Anspruch 7, **gekennzeichnet dadurch, dass**
die Gelegenheitsverkehrsverbindungsanforderung enthält Information, die einen Typ von Übertragungswegumschaltung darstellt,
Information, die eine Übertragungsvorrichtung darstellt als ein Übertragungsziel der Gelegenheitsverkehrsverbindungsanforderung,
Information, die eine Übertragungsvorrichtung darstellt als eine Übertragungsquelle der Gelegenheitsverkehrsverbindungsanforderung, und
Information, die eine Richtung darstellt, in der die Gelegenheitsverkehrsverbindungsanforderung übertragen wird.

12. Ein Verfahren nach Anspruch 11, **gekennzeichnet dadurch, dass**
die Gelegenheitsverkehrsverbindungsanforderung durch einen DCC übertragen wird, der durch die ITU-T-Empfehlung G.709 definiert ist.

13. Eine Übertragungsvorrichtung, die in einem Ringnetzsystem verwendet wird, das eine Vielzahl von Übertragungsvorrichtungen und einen Übertragungsweg hat, der multiplext ist durch Arbeitskanäle und Schutzkanäle, und die Vielzahl von Übertragungsvorrichtungen in einer Ringkonfiguration verbindet, um ein Ringnetz zu bilden, umfassend:
ein Übertragungssignal-Wiederherstellungssteuermittel (106a) zum Umschalten, wenn ein Fehler in dem Ringnetz auftritt, des Arbeitskanals/Schutzkanals des Übertragungswegs, um ein Übertragungssignal wiederherzustellen;
Übertragungsmittel (106b) zum Senden, wenn die Arbeitskanäle/Schutzkanäle der Übertragungswege umgeschaltet werden müssen, einer Gelegenheitsverkehrsverbindungsanforderung zu einer Übertragungsvorrichtung entgegenliegend über ein Segment, wo ein Übertragungswegumschaltungsgrund vorhanden ist, nachdem Umschaltung des Arbeitskanals/Schutzkanals des Übertragungswegs beendet ist;
Empfangsmittel (106b) zum Empfangen der Gelegenheitsverkehrsverbindungsanforderung, die von der Übertragungsvorrichtung entgegenliegend, über das Segment, wo der Übertragungswegumschaltungsgrund vorhanden ist, zu der Vorrichtung selbst gesendet wird; und
Neuverbindungsmittel (106c) zum Ausführen, nachdem die Gelegenheitsverkehrsverbindungsanforderung durch das Empfangsmittel empfangen ist, einer Gelegenheitsverkehrsneuverbindung zu der Übertragungsvorrichtung entgegenliegend über das Segment, wo der Übertragungswegumschaltungsgrund vorhanden ist.

14. Eine Übertragungsvorrichtung nach Anspruch 13, **gekennzeichnet dadurch, dass**
der Übertragungswegumschaltungsgrund Auftreten (S1; S101; S201) eines Fehlers ist.

15. Eine Übertragungsvorrichtung nach Anspruch 13, **gekennzeichnet dadurch, dass**
der Übertragungswegumschaltungsgrund Übertragungswegzurückschalten (S7; S107; S207; S307) folgend Erholung von einem Fehler ist.

16. Eine Übertragungsvorrichtung nach Anspruch 13, **gekennzeichnet dadurch, dass**
der Übertragungswegumschaltungsgrund Übertragungswegumschaltung (S307) für einen gehaltenen Fehler folgend Erholung von einem Fehler hoher Priorität von vielen Fehlern ist.

17. Eine Übertragungsvorrichtung nach Anspruch 13, **gekennzeichnet dadurch, dass**
die Gelegenheitsverkehrsverbindungsanforderung enthält Information, die einen Typ von Übertragungswegumschaltung darstellt,
Information, die eine Übertragungsvorrichtung darstellt als ein Übertragungsziel der Gelegenheitsverkehrsverbindungsanforderung,
Information, die eine Übertragungsvorrichtung darstellt als eine Übertragungsquelle der Gelegenheitsverkehrsverbindungsanforderung, und
Information, die eine Richtung darstellt, in der die Gelegenheitsverkehrsverbindungsanforderung übertragen wird.

18. Eine Übertragungsvorrichtung nach Anspruch 17, **gekennzeichnet dadurch, dass**
die Übertragungsvorrichtung umfasst eine Übertragungsvorrichtung synchroner digitaler Hierarchie (SDH), und
das Übertragungsmittel die Gelegenheitsverkehrsverbindungsanforderung durch einen DCC überträgt, der durch die ITU-T-Empfehlung G.709 definiert ist.

19. Eine Übertragungsvorrichtung, die in einem Ringnetzsystem verwendet wird, das eine Vielzahl von Übertragungsvorrichtungen und einen Übertragungsweg hat, der multiplext ist durch Arbeitskanäle und Schutzkanäle, und die Vielzahl von Übertragungsvorrichtungen in einer Ringkonfiguration verbindet, um ein Ringnetz zu bilden, wobei jeder der Arbeitskanal- und den Schutzkanal-Übertragungswege bidirektionale Übertragungswege in Richtungen mit und entgegen dem Uhrzeigersinn hat, umfassend:
ein Übertragungssignal-Wiederherstellungssteuermittel (106a) zum Umschalten, wenn ein Fehler in dem Ringnetz auftritt, des Arbeitskanals/Schutzkanals des Übertragungswegs, um ein Übertragungssignal wiederherzustellen;
Übertragungsmittel (106b) zum Senden, wenn die Arbeitskanäle/Schutzkanäle der Übertragungswege umgeschaltet werden müssen, und die Vorrichtung selbst eine Übertragungsvorrichtung ist, die die Initiative für Übertragungswegumschaltung übernimmt, einer Gelegenheitsverkehrsverbindungsanforderung durch den Übertragungsweg in der entgegengesetzten Richtung eines Segmentes, wo ein Übertragungswegumschaltungsgrund vorhanden ist, nachdem die Umschaltung des Arbeitskanals/Schutzkanals des Übertragungswegs beendet ist;
Empfangsmittel (106b) zum Empfangen der Gelegenheitsverkehrsverbindungsanforderung; und
Neuverbindungsmittel (106b, 106c) zum Empfangen, wenn die Arbeitskanäle/Schutzkanäle der Übertragungswege umgeschaltet werden müssen, falls die Vorrichtung selbst eine Übertragungsvorrichtung außer einer Übertragungsvorrichtung ist, die die Initiative für Übertragungswegumschaltung übernimmt, der Gelegenheitsverkehrsverbindungsanforderungen, die von beiden Richtungen durch den Übertragungsweg ankommen, und dann Ausführen einer Gelegenheitsverkehrsneuverbindung, und falls die Vorrichtung selbst eine Übertragungsvorrichtung ist, die die Initiative für Übertragungswegumschaltung übernimmt, Empfangen der Gelegenheitsverkehrsverbindungsanforderung, die durch den Übertragungsweg ankommt, und dann Ausführen der Gelegenheitsverkehrsneuverbindung.

20. Eine Übertragungsvorrichtung nach Anspruch 19, **gekennzeichnet dadurch, dass**
der Übertragungswegumschaltungsgrund Auftreten (S1; S101; S201) eines Fehlers ist.

21. Eine Übertragungsvorrichtung nach Anspruch 19, **gekennzeichnet dadurch, dass**
der Übertragungswegumschaltungsgrund Übertragungswegzurückschalten (S7; S107; 5207; S307) folgend Erholung von einem Fehler ist.

22. Eine Übertragungsvorrichtung nach Anspruch 19, **gekennzeichnet dadurch, dass**
der Übertragungswegumschaltungsgrund Übertragungswegumschaltung (S307) für einen gehaltenen Fehler folgend Erholung von einem Fehler hoher Priorität von vielen Fehlern ist.

23. Eine Übertragungsvorrichtung nach Anspruch 19, **gekennzeichnet dadurch, dass**
die Gelegenheitsverkehrsverbindungsanforderung enthält Information, die einen Typ von Übertragungswegumschaltung darstellt,
Information, die eine Übertragungsvorrichtung darstellt als ein Übertragungsziel der Gelegenheitsverkehrsverbindungsanforderung,
Information, die eine Übertragungsvorrichtung darstellt als eine Übertragungsquelle der Gelegenheitsverkehrsverbindungsanforderung, und
Information, die eine Richtung darstellt, in der die Gelegenheitsverkehrsverbindungsanforderung übertragen wird.

24. Eine Übertragungsvorrichtung nach Anspruch 23, **gekennzeichnet dadurch, dass**
die Übertragungsvorrichtung umfasst eine Übertragungsvorrichtung synchroner digitaler Hierarchie (SDH), und
das Übertragungsmittel die Gelegenheitsverkehrsverbindungsanforderung durch einen DCC überträgt, der durch die ITU-T-Empfehlung G.709 definiert ist.

## Revendications

1. Procédé de commande de connexion de trafic à temps partiel pour un système de réseau en anneau qui comporte une pluralité d'appareils de transmission (1, ..., 6) et de voies de transmission (L) multiplexées par des canaux de travail (11) et des canaux de protection (12) et connectant la pluralité d'appareils de transmission selon une configuration en anneau pour former un réseau en anneau, chacun de la pluralité d'appareils de transmission (1, ..., 6) disposant d'une fonction permettant de commuter les canaux de travail/les canaux de protection des voies de transmission (L) lorsqu'une défaillance se produit dans le réseau en anneau, comprenant :
la première étape (S4, S9 ; S104, S109 ; S204, S209 ; S309) consistant à, lorsque les canaux de travail/les canaux de protection des voies de transmission (L) doivent être commutés, envoyer des requêtes de connexion de trafic à temps partiel (61) depuis des appareils de transmission adjacents (2, 3) sur les deux côtés d'un segment où une raison de commutation de voie de transmission (31) est présente sur ceux opposés des appareils de transmission adjacents (2, 3) après qu'une commutation des canaux de travail/des canaux de protection des voies de transmission est terminée ;
la seconde étape (S5, S10 ; S105, S110 ; S205, S210 ; S310) consistant à recevoir, au moyen des appareils de transmission adjacents (2, 3), la requête de connexion de trafic à temps partiel (61) qui est envoyée depuis ceux opposés (2, 3) des appareils de transmission adjacents ; et
la troisième étape (S6, S11 ; S106, S111 ; S206, S211 ; S311) consistant à, après l'achèvement de la seconde étape, exécuter une reconnexion de trafic à temps partiel entre les appareils de transmission adjacents (2, 3).

2. Procédé selon la revendication 1, **caractérisé en ce que** la raison de commutation de voie de transmission est la survenue (S1 : S101 ; S201) d'une défaillance.

3. Procédé selon la revendication 1, **caractérisé en ce que** la raison de commutation de voie de transmission est une commutation de retour de voie de transmission (S7 ; S107 ; S207 ; S307) suite à une restauration par rapport à une défaillance.

4. Procédé selon la revendication 1, **caractérisé en ce que** le facteur de commutation de voie de transmission (S307) est une commutation de voie de transmission pour une défaillance continue qui fait suite à la restauration de défaillance de priorité élevée prise parmi de multiples défaillances.

5. Procédé selon la revendication 1, **caractérisé en ce que** :
la requête de connexion de trafic à temps partiel contient :
une information qui représente un type de commutation de voie de transmission ;
une information qui représente un appareil de transmission en tant que destination de transmission de la requête de connexion de trafic à temps partiel ;
une information qui représente un appareil de transmission en tant que source de transmission de la requête de connexion de trafic à temps partiel ; et
une information qui représente une direction dans laquelle la requête de connexion de trafic à temps partiel est transmise.

6. Procédé selon la revendication 5, **caractérisé en ce que** la requête de connexion de trafic à temps partiel est transmise par l'intermédiaire d'un canal de communication de données (DCC) qui est défini au moyen de la recommandation ITU-T G.709.

7. Procédé de commande de connexion de trafic à temps partiel pour un système de réseau en anneau qui comporte une pluralité d'appareils de transmission (1, ..., 6) et une voie de transmission multiplexée par des canaux de travail (11) et par des canaux de protection (12) et connectant la pluralité d'appareils de transmission (1, ..., 6) selon une configuration en anneau afin de former un réseau en anneau, chacune des voies de transmission de canal de travail et de canal de protection comportant des voies de transmission bidirectionnelles dans le sens des aiguilles d'une montre et dans le sens inverse des aiguilles d'une montre et chacun de la pluralité d'appareils de transmission comportant une fonction consistant à commuter les canaux de travail/les canaux de protection des voies de transmission lorsqu'une défaillance se produit dans le réseau en anneau, comprenant :
la première étape (S4, S9 ; S104, S109 ; S204, S209 ; S309) consistant à, lorsque les canaux de travail/les canaux de protection des voies de transmission doivent être commutés, envoyer une requête de connexion de trafic à temps partiel (61) depuis chaque appareil de transmission jouant le rôle de noeud de commutation prenant l'initiative d'une commutation de voie de transmission par l'intermédiaire de la voie de transmission dans la direction opposée d'un segment au niveau duquel une raison de commutation de voie de transmission est présente, après qu'une commutation du canal de travail/du canal de protection de la voie de transmission est terminée ;
la seconde étape (S5, S10 ; S105, S110 ; S205, S210 ; S309) consistant à recevoir, au moyen de chaque appareil de transmission autre que le noeud de commutation, les requêtes de connexion de trafic à temps partiel qui arrivent par l'intermédiaire de la voie de transmission depuis les deux directions ;
la troisième étape (S5, S10 ; S105, S110 ; S206, S210 ; S310) consistant à recevoir, au moyen de chaque appareil de transmission en tant que noeud de commutation, la requête de connexion de trafic à temps partiel qui arrive par l'intermédiaire de la voie de transmission ; et
la quatrième étape (S6, S11 ; S106, S111 ; S206, S211 ; S311) consistant à exécuter une reconnexion de trafic à temps partiel au moyen de chaque appareil de transmission autre que les noeuds de commutation après l'achèvement de la seconde étape et au moyen de chaque appareil de transmission en tant que noeud de commutation après l'achèvement de la troisième étape.

8. Procédé selon la revendication 7, **caractérisé en ce que** :
la raison de commutation de voie de transmission est la survenue (S1 ; S101 ; S201) d'une défaillance.

9. Procédé selon la revendication 7, **caractérisé en ce que** la raison de commutation de voie de transmission est une commutation de retour de voie de transmission (S7 ; S107 ; S307) suite à une restauration par rapport à une défaillance.

10. Procédé selon la revendication 7, **caractérisé en ce que** :
la raison de commutation de voie de transmission est une commutation de voie de transmission (S307) pour une défaillance continue qui fait suite à la restauration de défaillance de priorité élevée prise parmi de multiples défaillances.

11. Procédé selon la revendication 7, **caractérisé en ce que** :
la requête de connexion de trafic à temps partiel contient :
une information qui représente un type de commutation de voie de transmission ;
une information qui représente un appareil de transmission en tant que destination de transmission de la requête de connexion de trafic à temps partiel ;
une information qui représente un appareil de transmission en tant que source de transmission de la requête de connexion de trafic à temps partiel ; et
une information qui représente une direction dans laquelle la requête de connexion de trafic à temps partiel est transmise.

12. Procédé selon la revendication 11, **caractérisé en ce que** la requête de connexion de trafic à temps partiel est transmise par l'intermédiaire d'un DCC qui est défini au moyen de la recommandation ITU-T G.709.

13. Appareil de transmission utilisé dans un système de réseau en anneau qui comporte une pluralité d'appareils de transmission et une voie de transmission multiplexée par des canaux de travail et des canaux de protection et connectant ladite pluralité d'appareils de transmission selon une configuration en anneau afin de former un réseau en anneau, comprenant :
un moyen de commande de restauration de signal de transmission (106a) pour, lorsqu'une défaillance se produit dans le réseau en anneau, commuter le canal de travail/le canal de protection de la voie de transmission afin de restaurer un signal de transmission ;
un moyen d'émission (106b) pour, lorsque les canaux de travail/les canaux de protection de voie de transmission doivent être commutés, envoyer une requête de connexion de trafic à temps partiel sur un appareil de transmission en opposition via un segment au niveau duquel une raison de commutation de voie de transmission est présente après qu'une commutation du canal de travail/du canal de protection de la voie de transmission est terminée ;
un moyen de réception (106b) pour recevoir la requête de connexion de trafic à temps partiel qui est envoyée depuis ledit appareil de transmission en opposition via le segment au niveau duquel la raison de commutation de voie de transmission est présente sur l'appareil en question ; et
un moyen de reconnexion (106c) pour, après que la requête de connexion de trafic à temps partiel est reçue par ledit moyen de réception, exécuter une reconnexion de trafic à temps partiel sur ledit appareil de transmission en opposition via le segment au niveau duquel la raison de commutation de voie de transmission est présente.

14. Appareil de transmission selon la revendication 13, **caractérisé en ce que** la raison de commutation de voie de transmission est la survenue (S1 ; S101 ; S201) d'une défaillance.

15. Appareil de transmission selon la revendication 13, **caractérisé en ce que** la raison de commutation de voie de transmission est une commutation de retour de voie de transmission (S7 ; S107 ; S207 ; S307) suite à une restauration à partir d'une défaillance.

16. Appareil de transmission selon la revendication 13, **caractérisé en ce que** :
la raison de commutation de voie de transmission est une commutation de voie de transmission (S307) pour une défaillance continue qui fait suite à la restauration de défaillance de priorité élevée prise parmi de multiples défaillances.

17. Appareil de transmission selon la revendication 13, **caractérisé en ce que** la requête de connexion de trafic à temps partiel contient :
une information qui représente un type de commutation de voie de transmission ;
une information qui représente un appareil de transmission en tant que destination de transmission de la requête de connexion de trafic à temps partiel ;
une information qui représente un appareil de transmission en tant que source de transmission de la requête de connexion de trafic à temps partiel ; et
une information qui représente une direction dans laquelle la requête de connexion de trafic à temps partiel est transmise.

18. Appareil de transmission selon la revendication 17, **caractérisé en ce que** :
ledit appareil de transmission comprend un appareil de transmission à Hiérarchie Numérique Synchrone (SDH) ; et
ledit moyen d'émission émet la requête de connexion de trafic à temps partiel par l'intermédiaire d'un DCC qui est défini au moyen de la recommandation ITU-T G.709.

19. Appareil de transmission utilisé dans un système de réseau en anneau qui comporte une pluralité d'appareils de transmission et une voie de transmission multiplexée par des canaux de travail et des canaux de protection et connectant la pluralité d'appareils de transmission selon une configuration en anneau pour former un réseau en anneau, chacune des voies de transmission de canal de travail et de canal de protection étant une voie de transmission bidirectionnelle dans le sens des aiguilles d'une montre et dans le sens inverse des aiguilles d'une montre, comprenant :
un moyen de commande de restauration de signal de transmission (106a) pour, lorsqu'une défaillance se produit dans le réseau en anneau, commuter le canal de travail/le canal de protection de la voie de transmission afin de restaurer un signal de transmission ;
un moyen d'émission (106b) pour, lorsque les canaux de travail/les canaux de protection des voies de transmission doivent être commutés et que l'appareil en question est un appareil de transmission qui prend l'initiative d'une commutation de voie de transmission, envoyer une requête de connexion de trafic à temps partiel par l'intermédiaire de la voie de transmission dans la direction opposée d'un segment au niveau duquel une raison de commutation de voie de transmission est présente après qu'une commutation du canal de travail/du canal de protection de la voie de transmission est terminée ;
un moyen de réception (106b) pour recevoir la requête de connexion de trafic à temps partiel ; et
un moyen de reconnexion (106b, 106c) pour, lorsque les canaux de travail/les canaux de protection des voies de transmission doivent être commutés, si l'appareil en question est un appareil de transmission autre qu'un appareil de transmission prenant l'initiative d'une commutation de voie de transmission, recevoir les requêtes de connexion de trafic à temps partiel qui arrivent depuis les deux directions par l'intermédiaire de la voie de transmission puis pour exécuter une reconnexion de trafic à temps partiel et si l'appareil en question est un appareil de transmission qui prend l'initiative d'une commutation de voie de transmission, recevoir la requête de connexion de trafic à temps partiel qui arrive par l'intermédiaire de la voie de transmission puis pour exécuter une reconnexion de trafic à temps partiel.

20. Appareil de transmission selon la revendication 19, **caractérisé en ce que** la raison de commutation de voie de transmission est la survenue (S1 ; S101 ; S201) d'une défaillance.

21. Appareil de transmission selon la revendication 19, **caractérisé en ce que** la raison de commutation de voie de transmission est une commutation de retour de voie de transmission (S7 ; S107 ; S207 ; S307) qui fait suite à la restauration par rapport à une défaillance.

22. Appareil de transmission selon la revendication 19, **caractérisé en ce que** la raison de commutation de voie de transmission est une commutation de voie de transmission (S307) pour une défaillance continue qui fait suite à une restauration d'une défaillance de priorité élevée prise parmi de multiples défaillances.

23. Appareil de transmission selon la revendication 19,
**caractérisé en ce que** :
la requête de connexion de trafic à temps partiel contient :
une information qui représente un type de commutation de voie de transmission ;
une information qui représente un appareil de transmission en tant que destination de transmission de la requête de connexion de trafic à temps partiel;
une information qui représente un appareil de transmission en tant que source de transmission de la requête de connexion de trafic à temps partiel ; et
une information qui représente une direction dans laquelle la requête de connexion de trafic à temps partiel est transmise.

24. Appareil de transmission selon la revendication 23, **caractérisé en ce que** :
ledit appareil de transmission comprend un appareil de transmission à Hiérarchie Numérique Synchrone (SDH) ; et
ledit moyen d'émission émet la requête de connexion de trafic à temps partiel par l'intermédiaire d'un DCC qui est défini au moyen de la recommandation ITU-T G.709.
